# EUROPEAN PATENT APPLICATION

(11) **EP 3 370 472 A1**
(43) Date of publication of application: **05.09.2018**
(21) Application number: 15908546.3
(22) Date of filing: 18.11.2015
(51) Int. Cl.: H04W 76/02

(54) **METHOD AND DEVICE FOR ESTABLISHING LINKS**

(71) Applicant: Huawei Technologies Co., Ltd., Longgang District Shenzhen, Guangdong 518129 (CN)
(72) Inventor: ZHENG, Xiaoxiao, Shenzhen Guangdong 518129 (CN); BI, Hao, Shenzhen Guangdong 518129 (CN); PANG, Lingli, Shenzhen Guangdong 518129 (CN); HUANG, Min, Shenzhen Guangdong 518129 (CN)
(74) Representative: Gill Jennings & Every LLP
(86) International application number: PCT/CN2015/094941
(87) International publication number: WO 2017/084049

(57) **Abstract**

The present invention relates to the field of mobile communications technologies, and in particular, to a link setup method and a device, so as to resolve a technical problem of a relatively long transmission delay caused by a relatively long service data transmission path. A first network device may obtain first routing information of a direct link that is set up between a first terminal and a second terminal. In this way, when the two terminals communicate with each other, a service data transmission path may be the first terminal -> a first access network device -> a second access network device -> the second terminal, or may be the first terminal -> a first access network device -> a first core network device -> a second access network device -> the second terminal. Either of the paths is shorter than a prior-art transmission path. Therefore, a transmission delay is shortened, transmission efficiency is improved, and a transmission resource is saved.

## Description

### TECHNICAL FIELD

The present invention relates to the field of communications technologies, and in particular, to a link setup method and a device.

### BACKGROUND

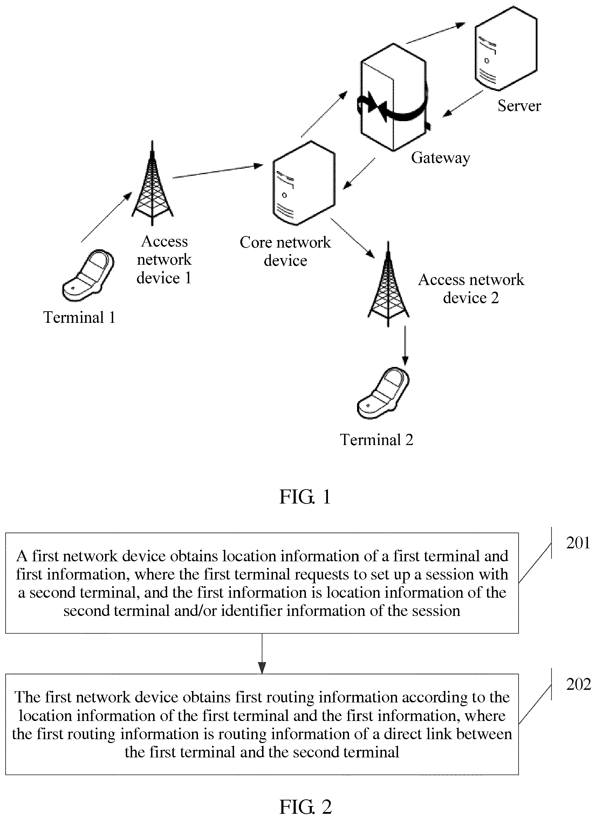

Currently, for a communication manner of a peer-to-peer (Peer to Peer, P2P) network service such as a voice service or a video service, refer to FIG. 1. For example, when a terminal 1 needs to perform P2P communication with a terminal 2, a path in which service data travels is the terminal 1 -> an access network device 1 that serves the terminal 1 -> a core network device -> a gateway -> a server -> the gateway -> the core network device -> an access network device 2 that serves a terminal 2 -> the terminal 2. The transmission path is shown by arrows in FIG. 1. For example, the gateway may include a P-GW and an S-GW. That is, a more specific transmission path may be the terminal 1 -> the access network device 1 that serves the terminal 1 -> the core network device -> the P-GW -> the S-GW -> the server -> the S-GW -> the P-GW -> the core network device -> the access network device 2 that serves the terminal 2 -> the terminal 2. This more specific transmission path is not shown in FIG. 1.

It can be learned that a current service data transmission path is relatively long and needs to pass through a relatively large quantity of devices. This apparently increases a transmission delay and wastes a relatively large amount of transmission resources.

### SUMMARY

This application provides a link setup method and a device, so as to resolve a technical problem of a relatively long transmission delay caused by a relatively long service data transmission path.

According to a first aspect, a first link setup method is provided, where the method includes:
obtaining, by a first network device, location information of a first terminal and first information, where the first terminal requests to set up a session with a second terminal, and the first information is location information of the second terminal and/or identifier information of the session; and
obtaining, by the first network device, first routing information according to the location information of the first terminal and the first information, where the first routing information is routing information of a direct link between the first terminal and the second terminal.

In this application, the first network device may obtain location information of the terminals at both communications ends or may obtain location information of one of the terminals and the identifier information of the session. The first network device can obtain, according to the obtained information, the routing information (that is, the first routing information) of the direct link that is set up between the two terminals. In this way, when the two terminals communicate with each other, a service data transmission path may be the first terminal -> a first access network device -> a second access network device -> the second terminal, or may be the first terminal -> a first access network device -> a first core network device -> a second access network device -> the second terminal. Either of the paths is shorter than a prior-art transmission path. Therefore, a transmission delay is shortened, transmission efficiency is improved, and a transmission resource is saved.

With reference to the first aspect, in a first possible implementation of the first aspect, if the first network device is a first access network device that serves the first terminal, the obtaining, by the first network device, first routing information according to the location information of the first terminal and the first information includes:
determining, by the first network device according to the location information of the first terminal and the first information, whether the direct link can be set up between the first terminal and the second terminal; and
if the first network device determines that the direct link can be set up between the first terminal and the second terminal, generating, by the first network device, the first routing information according to the location information of the first terminal and the first information; or
determining, by the first network device according to the location information of the first terminal and the first information, whether the direct link can be set up between the first terminal and the second terminal;
if the first network device determines that the direct link can be set up between the first terminal and the second terminal, sending, by the first network device, a first direct routing request message to a second core network device, where the first direct routing request message is used to instruct the second core network device to allocate the first routing information; and
receiving, by the first network device, the first routing information sent by the second core network device.

After the first access network device determines that the direct link can be set up between the first terminal and the second terminal, the first access network device may directly generate the first routing information. The first routing information is generated in a relatively direct process without using another device. Alternatively, after the first access network device determines that the direct link can be set up between the first terminal and the second terminal, the first access network device may instruct the second core network device to generate the first routing information. Because the first routing information is generated by the core network device, load on the first access network device is relieved, and fewer functions may need to be configured for the first access network device. In addition, because the first routing information is generated by the second core network device, the second core network device certainly knows the direct link that is set up between the first terminal and the second terminal, without being notified of the direct link by the first access network device. Therefore, an amount of transmitted information is reduced.

With reference to the first possible implementation of the first aspect, in a second possible implementation of the first aspect, after the generating, by the first network device, the first routing information according to the location information of the first terminal and the first information, the method further includes: sending, by the first network device, the first routing information to a second access network device that serves the second terminal, so as to set up the direct link; or separately sending, by the first network device, the first routing information to a first core network device and a second access network device that serves the second terminal, so as to set up the direct link.

After generating the first routing information, the first access network device needs to send the first routing information to a device related to the direct link between the first terminal and the second terminal. In this way, after receiving the first routing information, the corresponding device may perform self-configuration according to the first routing information, and this is equivalent to direct-link setup. A device to which the first routing information is sent may be specified by a system or a protocol or be self-determined by the first access network device.

With reference to the second possible implementation of the first aspect, in a third possible implementation of the first aspect, the sending, by the first network device, the first routing information to a second access network device that serves the second terminal includes:
directly sending, by the first network device, the first routing information to the second access network device; or
sending, by the first network device, the first routing information to the second access network device by using the second core network device.

The first access network device and the second access network device may directly communicate with each other, or may communicate with each other by using the second core network device for forwarding. This is relatively flexible.

With reference to the second possible implementation or the third possible implementation of the first aspect, in a fourth possible implementation of the first aspect, after the separately sending, by the first network device, the first routing information to the first access network device and a second access network device that serves the second terminal, or the separately sending, by the first network device, the first routing information to the first access network device, a first core network device, and a second access network device that serves the second terminal, the method further includes: sending, by the first network device, a first notification message to the second core network device, where the first notification message is used to indicate the direct link that is set up between the first terminal and the second terminal.

If the first routing information is generated by the first access network device, the first access network device may further notify the second core network device that the direct link is set up between the first terminal and the second terminal. This facilitates subsequent possible direct-link deletion or handover, and further facilitates participation of the second core network device in management of the direct link.

With reference to the second possible implementation, the third possible implementation, or the fourth possible implementation of the first aspect, in a fifth possible implementation of the first aspect, after the direct link is set up, the method further includes: directly sending, by the first network device, a first connection release message to the second access network device, or sending, by the first network device, the first connection release message to the second access network device and/or the first core network device by using the second core network device, where the first connection release message is used to instruct to release a resource of the session and a resource of the direct link.

After the direct link is set up, the direct link may need to be deleted. In this case, the first access network device needs only to directly send the first connection release message to the device related to the direct link (that is, the device that receives the first routing information). After receiving the first connection release message, the device may release the resource of the session that is set up between the first terminal and the second terminal and the resource of the direct link, and therefore the direct link is deleted. This manner is extremely simple.

With reference to the second possible implementation, the third possible implementation, the fourth possible implementation, or the fifth possible implementation of the first aspect, in a sixth possible implementation of the first aspect, after the direct link is set up, the method further includes:
determining, by the first network device, that the first terminal is to be handed over to a third access network device; and
sending, by the first network device, a handover request to the third access network device, or sending, by the first network device, a handover request to the third access network device by using the second core network device, where the handover request carries the location information of the second terminal and/or the first routing information, and the location information of the second terminal and/or the first routing information are/is used to obtain second routing information of a new direct link between the first terminal and the second terminal.

After the direct link is set up, direct-link handover may need to be performed due to a location change of the terminal. In this case, the first access network device needs only to send the handover request to the third access network device. For example, the third access network device may obtain the second routing information according to the location information of the second terminal and/or the first routing information that are/is carried in the handover request, so that after being handed over to the third access network device, the first terminal may communicate with the second terminal by using the new direct link. A handover process is relatively simple without terminal participation. This ensures that a transmission path can be as short as possible even after a location change of the terminal.

With reference to the first aspect, in a seventh possible implementation of the first aspect, if the first network device is a second core network device,
the obtaining, by a first network device, location information of a first terminal and first information includes:
receiving, by the first network device, the location information of the first terminal and the first information that are sent by a first access network device that serves the first terminal; and
the obtaining, by the first network device, first routing information according to the location information of the first terminal and the first information includes:
   determining, by the first network device according to the location information of the first terminal and the first information, whether the direct link can be set up between the first terminal and the second terminal; and
   if the first network device determines that the direct link can be set up between the first terminal and the second terminal, generating, by the first network device, the first routing information according to the location information of the first terminal and the first information.

A determining process may be performed by the second core network device, so that load on an access network device is relieved. The second core network device can generate the first routing information provided that the second core network device determines that the direct link can be set up between the first terminal and the second terminal. In this way, when the two terminals communicate with each other, a service data transmission path may be the first terminal -> a first access network device -> a second access network device -> the second terminal, or may be the first terminal -> a first access network device -> a first core network device -> a second access network device -> the second terminal. Either of the paths is shorter than a prior-art transmission path. Therefore, a transmission delay is shortened, transmission efficiency is improved, and a transmission resource is saved.

With reference to the seventh possible implementation of the first aspect, in an eighth possible implementation of the first aspect, after the generating, by the first network device, the first routing information, the method further includes: separately sending, by the first network device, the first routing information to the first access network device and a second access network device that serves the second terminal, so as to set up the direct link; or separately sending, by the first network device, the first routing information to the first access network device, a first core network device, and a second access network device that serves the second terminal, so as to set up the direct link.

After generating the first routing information, the second core network device also needs to send the first routing information to a device related to the direct link between the first terminal and the second terminal. In this way, after receiving the first routing information, the corresponding device may perform self-configuration according to the first routing information, and this is equivalent to direct-link setup. A device to which the first routing information is sent may be specified by a system or a protocol or be self-determined by the second core network device.

With reference to the eighth possible implementation of the first aspect, in a ninth possible implementation of the first aspect, after the direct link is set up, the method further includes: separately sending, by the first network device, a first connection release message to the first access network device and the second access network device, or separately sending, by the first network device, a first connection release message to the first access network device, the second access network device, and the first core network device, where the first connection release message is used to instruct to release a resource of the session and a resource of the direct link.

After the direct link is set up, the direct link may need to be deleted. In this case, if the direct-link setup is determined by the second core network device, the second core network device may need only to send the first connection release message to the device related to the direct link (that is, the device that receives the first routing information). After receiving the first connection release message, the device may release the resource of the session that is set up between the first terminal and the second terminal and the resource of the direct link, and therefore the direct link is deleted. This manner is extremely simple.

With reference to the eighth possible implementation or the ninth possible implementation of the first aspect, in a tenth possible implementation of the first aspect, after the direct link is set up, the method further includes:
receiving, by the first network device, a second notification message, where the second notification message is used to indicate that the first terminal is to be handed over to a third access network device, and the second notification message carries the location information of the second terminal and/or the first routing information;
obtaining, by the first network device, second routing information according to the location information of the second terminal and/or the first routing information, where the second routing information is routing information of a direct link between the second terminal and the first terminal that is handed over to the third access network device; and
separately sending, by the first network device, the second routing information to the second access network device and the third access network device, or separately sending, by the first network device, the second routing information to the second access network device, the third access network device, and the first core network device.

When cell handover needs to be performed due to a location change of the first terminal, the first access network device may send the second notification message to the second core network device, and then the second core network device may obtain the second routing information, so that after being handed over to the third access network device, the first terminal may communicate with the second terminal by using the new direct link. A handover process is relatively simple without terminal participation. This ensures that a transmission path can be as short as possible even after a location change of the terminal.

According to a second aspect, a second link setup method is provided, where the method includes:
receiving, by a second core network device, a first direct routing request message; and
generating, by the second core network device, first routing information according to the first direct routing request message, where the first routing information is routing information of a direct link between a first terminal and a second terminal, and the first terminal requests to set up a session with the second terminal.

For example, if a first access network device determines that the direct link can be set up between the first terminal and the second terminal, the first access network device may send the first direct routing request message to the second core network device, and then the second core network device may generate the first routing information. Therefore, load on the first access network device is relieved, fewer functions need to be configured for the first access network device, and costs of the first access network device may be reduced to some extent.

With reference to the second aspect, in a first possible implementation of the second aspect, after the generating, by the second core network device, the first routing information, the method further includes: separately sending, by the second core network device, the first routing information to a first access network device that serves the first terminal and a second access network device that serves the second terminal, so as to set up the direct link; or separately sending, by the first network device, the first routing information to a first access network device that serves the first terminal, a second access network device that serves the second terminal, and a first core network device, so as to set up the direct link.

After the first routing information is generated, the first routing information needs to be sent to a device related to the direct link. After receiving the first routing information, the corresponding device may perform self-configuration according to the first routing information, so as to set up the direct link. Therefore, the first terminal and the second terminal may communicate with each other by using the direct link, and a transmission path is shortened.

With reference to the first possible implementation of the second aspect, in a second possible implementation of the second aspect, after the direct link is set up, the method further includes: separately sending, by the second core network device, a first connection release message to the first access network device and the second access network device, or separately sending, by the second core network device, a first connection release message to the first access network device, the second access network device, and the first core network device, where the first connection release message is used to instruct to release a resource of the session and a resource of the direct link.

With reference to the first possible implementation or the second possible implementation of the second aspect, in a third possible implementation of the second aspect, after the direct link is set up, the method further includes:
receiving, by the second core network device, a second direct routing request message, where the second direct routing request message is used to instruct the second core network device to allocate second routing information, and the second routing information is routing information of a direct link between the second terminal and the first terminal that is handed over to the third access network device;
generating, by the second core network device, the second routing information; and
separately sending, by the second core network device, the second routing information to the second access network device and the third access network device, or separately sending, by the second core network device, the second routing information to the second access network device, the third access network device, and the first core network device.

When direct-link handover needs to be performed, the first access network device may determine whether a new direct link can still be set up between the first terminal and the second terminal. If determining that the new direct link can still be set up between the first terminal and the second terminal, the first access network device may send the second direct routing request message to the second core network device, and the second core network device may directly generate the second routing information. In this way, less work needs to be done by an access network device, and load on the access network device is relieved.

According to a third aspect, a third link setup method is provided, where the method includes:
receiving, by a third access network device, a handover request sent by a first access network device, where the handover request is used to indicate that a first terminal is to be handed over from the first access network device to the third access network device, the handover request carries location information of a second terminal and/or first routing information, the first routing information is routing information of an old direct link between the second terminal and the first terminal that accesses the first access network device, and the first terminal and the second terminal are having a session by using the old direct link; and
obtaining, by the third access network device, second routing information of a new direct link between the first terminal and the second terminal according to the location information of the second terminal and/or the first routing information.

When direct-link handover needs to be performed, the first access network device may send the handover request to the third access network device, and then the third access network device may obtain the second routing information according to the location information of the second terminal and/or the first routing information that are/is carried in the handover request. Therefore, after being handed over to the third access network device, the first terminal may continue to communicate with the second terminal by using the new direct link. This avoids communication process interruption as much as possible and shortens a transmission path as much as possible.

With reference to the third aspect, in a first possible implementation of the third aspect, the obtaining, by the third access network device, second routing information of a new direct link between the first terminal and the second terminal according to the location information of the second terminal and/or the first routing information includes:
determining, by the third access network device according to the location information of the second terminal and/or the first routing information, whether the new direct link can be set up between the first terminal and the second terminal; and
if the third access network device determines that the new direct link can be set up between the first terminal and the second terminal, generating, by the third access network device, the second routing information according to the location information of the second terminal and/or the first routing information; or
determining, by the third access network device according to the location information of the second terminal and/or the first routing information, whether the new direct link can be set up between the first terminal and the second terminal;
if the third access network device determines that the new direct link can be set up between the first terminal and the second terminal, sending, by the third access network device, a second direct routing request message to a second core network device, where the second direct routing request message is used to instruct the second core network device to allocate the second routing information; and
receiving, by the third access network device, the second routing information sent by the second core network device.

That is, after the third access network device determines that the new direct link can be set up between the first terminal and the second terminal, the third access network device may directly generate the second routing information. The second routing information is generated in a relatively simple manner without using another device, and a relatively short time is required. Alternatively, after the third access network device determines that the new direct link can be set up between the first terminal and the second terminal, the third access network device may send the second direct routing request message to the second core network device, and the second core network device may generate the second routing information. Therefore, load on the third access network device is relieved.

With reference to the first possible implementation of the third aspect, in a second possible implementation of the third aspect, after the generating, by the third access network device, the second routing information according to the location information of the second terminal and/or the first routing information, the method further includes: sending, by the third access network device, the second routing information to a second access network device that serves the second terminal, so as to set up the new direct link; or sending, by the third access network device, the second routing information to a first core network device and a second access network device that serves the second terminal, so as to set up the new direct link.

If the second routing information is generated by the third access network device, the third access network device further needs to send the second routing information to a device related to the new direct link, so as to set up the new direct link. However, if the second routing information is generated by the second core network device, the second core network device may send the second routing information to a device related to the new direct link, and therefore less work needs to be done by the third access network device.

With reference to the second possible implementation of the third aspect, in a third possible implementation of the third aspect, the sending, by the third access network device, the second routing information to a second access network device that serves the second terminal includes:
directly sending, by the third access network device, the second routing information to the second access network device; or
sending, by the third access network device, the second routing information to the second access network device by using the second core network device.

Likewise, the two access network devices can directly communicate with each other, or may communicate with each other by using the core network device. This is relatively flexible.

According to a fourth aspect, a fourth link setup method is provided, where the method includes:
when requesting to set up a session with a second terminal, obtaining, by a first terminal, location information of the second terminal by using a signaling channel between the first terminal and the second terminal or a signaling channel between the first terminal and a network side; and
sending, by the first terminal, location information of the first terminal and the location information of the second terminal to a first network device, where the location information of the first terminal and the location information of the second terminal are used to obtain first routing information of a direct link between the first terminal and the second terminal.

Provided that the first terminal sends the location information of the first terminal and the location information of the second terminal to the first network device, the first terminal can communicate with the second terminal by using the direct link. Therefore, extremely simple work needs to be done by the terminal, a transmission path between the two terminals is shortened, a transmission resource is saved, and transmission efficiency is improved.

According to a fifth aspect, a network device is provided, where the network device includes: a memory, configured to store an instruction; and a processor, configured to execute the instruction to: obtain location information of a first terminal and first information, where the first terminal requests to set up a session with a second terminal, and the first information is location information of the second terminal and/or identifier information of the session; and obtain first routing information according to the location information of the first terminal and the first information, where the first routing information is routing information of a direct link between the first terminal and the second terminal.

With reference to the fifth aspect, in a first possible implementation of the fifth aspect, if the first network device is a first access network device that serves the first terminal, the network device further includes a transmitter and a receiver, and the processor is configured to:
determine, according to the location information of the first terminal and the first information, whether the direct link can be set up between the first terminal and the second terminal; and if determining that the direct link can be set up between the first terminal and the second terminal, generate the first routing information according to the location information of the first terminal and the first information; or
determine, according to the location information of the first terminal and the first information, whether the direct link can be set up between the first terminal and the second terminal; if determining that the direct link can be set up between the first terminal and the second terminal, send a first direct routing request message to a second core network device by using the transmitter, where the first direct routing request message is used to instruct the second core network device to allocate the first routing information; and
receive, by using the receiver, the first routing information sent by the second core network device.

With reference to the first possible implementation of the fifth aspect, in a second possible implementation of the fifth aspect, the processor is further configured to:
after generating the first routing information according to the location information of the first terminal and the first information, send the first routing information to a second access network device that serves the second terminal, so as to set up the direct link; or
after generating the first routing information according to the location information of the first terminal and the first information, separately send the first routing information to a first core network device and a second access network device that serves the second terminal, so as to set up the direct link.

With reference to the second possible implementation of the fifth aspect, in a third possible implementation of the fifth aspect, the processor is configured to:
directly send the first routing information to the second access network device by using the transmitter; or
send the first routing information to the second access network device by using the transmitter and the second core network device.

With reference to the second possible implementation or the third possible implementation of the fifth aspect, in a fourth possible implementation of the fifth aspect, the processor is further configured to: send a first notification message to the second core network device after separately sending, by using the transmitter, the first routing information to the first access network device and the second access network device that serves the second terminal, or separately sending, by the first network device by using the transmitter, the first routing information to the first access network device, the first core network device, and the second access network device that serves the second terminal, where the first notification message is used to indicate the direct link that is set up between the first terminal and the second terminal.

With reference to the second possible implementation, the third possible implementation, or the fourth possible implementation of the fifth aspect, in a fifth possible implementation of the fifth aspect, the processor is further configured to: after the direct link is set up, directly send a first connection release message to the second access network device by using the transmitter, or send the first connection release message to the second access network device and/or the first core network device by using the transmitter and the second core network device, where the first connection release message is used to instruct to release a resource of the session and a resource of the direct link.

With reference to the second possible implementation, the third possible implementation, the fourth possible implementation, or the fifth possible implementation of the fifth aspect, in a sixth possible implementation of the fifth aspect, the processor is further configured to:
after the direct link is set up, determine that the first terminal is to be handed over to a third access network device; and
send a handover request to the third access network device by using the transmitter, or send a handover request to the third access network device by using the transmitter and the second core network device, where the handover request carries the location information of the second terminal and/or the first routing information, and the location information of the second terminal and/or the first routing information are/is used to obtain second routing information of a new direct link between the first terminal and the second terminal.

With reference to the fifth aspect, in a seventh possible implementation of the fifth aspect, if the network device is a second core network device, the network device further includes a receiver, and the processor is configured to:
receive, by using the receiver, the location information of the first terminal and the first information that are sent by a first access network device that serves the first terminal;
determine, according to the location information of the first terminal and the first information, whether the direct link can be set up between the first terminal and the second terminal; and
if determining that the direct link can be set up between the first terminal and the second terminal, generate the first routing information according to the location information of the first terminal and the first information.

With reference to the seventh possible implementation of the fifth aspect, in an eighth possible implementation of the fifth aspect, the network device further includes a transmitter, and the processor is further configured to:
after generating the first routing information, separately send, by using the transmitter, the first routing information to the first access network device and a second access network device that serves the second terminal, so as to set up the direct link; or
after generating the first routing information, separately send, by using the transmitter, the first routing information to the first access network device, a first core network device, and a second access network device that serves the second terminal, so as to set up the direct link.

With reference to the eighth possible implementation of the fifth aspect, in a ninth possible implementation of the fifth aspect, the processor is further configured to: after the direct link is set up, separately send a first connection release message to the first access network device and the second access network device by using the transmitter, or separately send a first connection release message to the first access network device, the second access network device, and the first core network device by using the transmitter, where the first connection release message is used to instruct to release a resource of the session and a resource of the direct link.

With reference to the eighth possible implementation or the ninth possible implementation of the fifth aspect, in a tenth possible implementation of the fifth aspect, the processor is further configured to:
after the direct link is set up, receive a second notification message by using the receiver, where the second notification message is used to indicate that the first terminal is to be handed over to a third access network device, and the second notification message carries the location information of the second terminal and/or the first routing information;
obtain second routing information according to the location information of the second terminal and/or the first routing information, where the second routing information is routing information of a direct link between the second terminal and the first terminal that is handed over to the third access network device; and
separately send the second routing information to the second access network device and the third access network device by using the transmitter, or separately send the second routing information to the second access network device, the third access network device, and the first core network device by using the transmitter.

According to a sixth aspect, a core network device is provided, where the core network device includes:
a memory, configured to store an instruction;
a receiver, configured to receive a first direct routing request message; and
a processor, configured to execute the instruction to generate first routing information according to the first direct routing request message received by the receiver, where the first routing information is routing information of a direct link between a first terminal and a second terminal, and the first terminal requests to set up a session with the second terminal.

With reference to the sixth aspect, in a first possible implementation of the sixth aspect, the core network device further includes a transmitter, and the processor is configured to:
after generating the first routing information, separately send, by using the transmitter, the first routing information to a first access network device that serves the first terminal and a second access network device that serves the second terminal, so as to set up the direct link; or
after generating the first routing information, separately send, by using the transmitter, the first routing information to a first access network device that serves the first terminal, a second access network device that serves the second terminal, and a first core network device, so as to set up the direct link.

With reference to the first possible implementation of the sixth aspect, in a second possible implementation of the sixth aspect, the processor is further configured to: after the direct link is set up, separately send a first connection release message to the first access network device and the second access network device by using the transmitter, or separately send a first connection release message to the first access network device, the second access network device, and the first core network device by using the transmitter, where the first connection release message is used to instruct to release a resource of the session and a resource of the direct link.

With reference to the first possible implementation or the second possible implementation of the sixth aspect, in a third possible implementation of the sixth aspect,
the receiver is further configured to:
after the direct link is set up, receive a second direct routing request message, where the second direct routing request message is used to instruct the core network device to allocate second routing information, and the second routing information is routing information of a direct link between the second terminal and the first terminal that is handed over to the third access network device; and
the processor is further configured to:
   generate the second routing information; and
   separately send the second routing information to the second access network device and the third access network device by using the transmitter, or separately send the second routing information to the second access network device, the third access network device, and the first core network device by using the transmitter.

According to a seventh aspect, an access network device is provided, where the access network device includes:
a memory, configured to store an instruction;
a receiver, configured to receive a handover request sent by a first access network device, where the handover request is used to indicate that a first terminal is to be handed over from the first access network device to the access network device, the handover request carries location information of a second terminal and/or first routing information, the first routing information is routing information of an old direct link between the second terminal and the first terminal that accesses the first access network device, and the first terminal and the second terminal are having a session by using the old direct link; and
a processor, configured to execute the instruction to obtain second routing information of a new direct link between the first terminal and the second terminal according to the location information of the second terminal and/or the first routing information.

With reference to the seventh aspect, in a first possible implementation of the seventh aspect, the access network device further includes a transmitter, and the processor is configured to:
determine, according to the location information of the second terminal and/or the first routing information, whether the new direct link can be set up between the first terminal and the second terminal; and
if determining that the new direct link can be set up between the first terminal and the second terminal, generate the second routing information according to the location information of the second terminal and/or the first routing information; or
determine, according to the location information of the second terminal and/or the first routing information, whether the new direct link can be set up between the first terminal and the second terminal;
if determining that the new direct link can be set up between the first terminal and the second terminal, send a second direct routing request message to a second core network device by using the transmitter, where the second direct routing request message is used to instruct the second core network device to allocate the second routing information; and
receive, by using the receiver, the second routing information sent by the second core network device.

With reference to the first possible implementation of the seventh aspect, in a second possible implementation of the seventh aspect, the processor is further configured to:
after generating the second routing information according to the location information of the second terminal and/or the first routing information, send, by using the transmitter, the second routing information to a second access network device that serves the second terminal, so as to set up the new direct link; or
after generating the second routing information according to the location information of the second terminal and/or the first routing information, send, by using the transmitter, the second routing information to a first core network device and a second access network device that serves the second terminal, so as to set up the new direct link.

With reference to the second possible implementation of the seventh aspect, in a third possible implementation of the seventh aspect, the processor is configured to: directly send the second routing information to the second access network device by using the transmitter; or send the second routing information to the second access network device by using the transmitter and the second core network device.

According to an eighth aspect, a terminal is provided, where the terminal includes:
a memory, configured to store an instruction; and
a processor, configured to execute the instruction to: when requesting to set up a session with a second terminal, obtain location information of the second terminal by using a signaling channel between the terminal and the second terminal or a signaling channel between the terminal and a network side; and send location information of the terminal and the location information of the second terminal to a first network device by using a transmitter, where the location information of the terminal and the location information of the second terminal are used to obtain first routing information of a direct link between the terminal and the second terminal.

According to a ninth aspect, a network device is provided, where the network device includes modules configured to perform the method according to the first aspect.

According to a tenth aspect, a core network device is provided, where the core network device includes modules configured to perform the method according to the second aspect.

According to an eleventh aspect, an access network device is provided, where the access network device includes modules configured to perform the method according to the third aspect.

According to a twelfth aspect, a terminal is provided, where the terminal includes modules configured to perform the method according to the fourth aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a transmission path during P2P communication;
FIG. 2 is a flowchart of a first link setup method according to an embodiment of the present invention;
FIG. 3 is a flowchart of a second link setup method according to an embodiment of the present invention;
FIG. 4 is a flowchart of a third link setup method according to an embodiment of the present invention;
FIG. 5 is a flowchart of a fourth link setup method according to an embodiment of the present invention;
FIG. 6 is a first flowchart of direct-link setup according to an embodiment of the present invention;
FIG. 7 is a second flowchart of direct-link setup according to an embodiment of the present invention;
FIG. 8 is a first flowchart of direct-link deletion according to an embodiment of the present invention;
FIG. 9 is a second flowchart of direct-link deletion according to an embodiment of the present invention;
FIG. 10 is a first flowchart of direct-link handover according to an embodiment of the present invention;
FIG. 11 is a second flowchart of direct-link handover according to an embodiment of the present invention;
FIG. 12A and FIG. 12B are schematic structural diagrams of a first network device according to an embodiment of the present invention;
FIG. 13A and FIG. 13B are schematic structural diagrams of a second core network device according to an embodiment of the present invention;
FIG. 14A and FIG. 14B are schematic structural diagrams of a third access network device according to an embodiment of the present invention;
FIG. 15 is a schematic structural diagram of a first terminal according to an embodiment of the present invention;
FIG. 16 is a structural block diagram of a first network device according to an embodiment of the present invention;
FIG. 17 is a structural block diagram of a second core network device according to an embodiment of the present invention;
FIG. 18 is a structural block diagram of a third access network device according to an embodiment of the present invention; and
FIG. 19 is a structural block diagram of a first terminal according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The solutions in the embodiments of the present invention may be applied to an existing mobile communications system, for example, a long term evolution (Long Term Evolution, LTE) system, a 5th generation mobile communications system (5G), and another communications system of this type. A network-side device may be an eNB, an RNC, or a BSC, or may be a base station or a core network node.

In a subsequent network architecture evolution process, a function of a core network and a function of an access network may be further combined or separated, but neither affects processing in the embodiments of the present invention. Regardless of function division, devices corresponding to a terminal that provide data transmission are all referred to as network devices. In addition, there may be a plurality of types of relay devices in a data transmission process, and one of the plurality of types of relay devices may be user equipment. These relay devices may also be network devices in the embodiments of the present invention.

A session in the embodiments of the present invention may be a P2P session, or may be a session of another type.

For ease of understanding by a person skilled in the art, the following explains some terms in the embodiments of the present invention.
(1) A terminal is a device that provides voice and/or data connectivity to a user. For example, the terminal may be a handheld device with a wireless connection function, or a processing device connected to a wireless modem. The terminal device may communicate with a core network by using a residential access network (Residential Access Network, RAN), and exchange voice and/or data with the RAN. The terminal may be referred to as user equipment (user equipment, UE), a wireless terminal device, a mobile terminal device, a subscriber unit (Subscriber Unit), a subscriber station (Subscriber Station), a mobile station (Mobile Station), a mobile station (Mobile), a remote station (Remote Station), an access point (Access Point, AP), a remote terminal device (Remote Terminal), an access terminal device (Access Terminal), a user terminal device (User Terminal), a user agent (User Agent), a user device (User Device), or the like. For example, the terminal may be a mobile phone (or referred to as a "cellular" phone), a computer with a mobile terminal device, or a portable, pocket-sized, handheld, computer built-in, or in-vehicle mobile apparatus. For example, the terminal may be a device such as a personal communications service (Personal Communication Service, PCS) phone, a cordless telephone set, a session initiation protocol (SIP) phone, a wireless local loop (Wireless Local Loop, WLL) station, or a personal digital assistant (Personal Digital Assistant, PDA).
(2) A network device, for example, may be an access network device, such as a base station (for example, an access point), and may be specifically a device that communicates with a wireless terminal device over an air interface in an access network by using one or more sectors. The base station may be configured to mutually convert a received over-the-air frame and an Internet Protocol (IP) packet, and act as a router between the wireless terminal device and a remaining part of the access network. The remaining part of the access network may include an IP network. The base station may further coordinate attribute management of an air interface. For example, the base station may be a radio network controller (Radio Network Controller, RNC) or a base station controller (Base Station Controller, BSC), or may be an evolved NodeB (NodeB, eNB, or e-NodeB, evolutional NodeB) in long term evolution advanced (LTE-Advanced, LTE-A). This is not limited in the embodiments of the present invention.
   Alternatively, for example, the network device may be a core network (core network, CN) device, for example, a control node in a core network, such as a mobility management entity (Mobility Management Entity, MME). The MME is a key control node in an access network.
(3) P2P computing may be simply defined as sharing a computer resource and service through direct exchange. A network formed at an application layer by a peer-to-peer computing model is usually referred to as a peer-to-peer network, that is, a P2P network. A session performed by using the P2P network is referred to as a P2P session in the embodiments of the present invention. In a P2P network environment, thousands of mutually connected computers are peer-to-peer, and an entire network generally does not depend on a dedicated centralized server. Each computer in the network can act as a network service requester, and further respond to a request of another computer to provide a resource and a service for the another computer. The resource and the service usually include: information sharing and exchange, a computing resource (such as CPU sharing), storage sharing (such as using of cache and disk space), and the like.
(4) The terms "system" and "network" in the embodiments of the present invention may be used interchangeably. "A plurality of" means "at least two". "And/or" describes an association relationship between associated objects and indicates that three relationships may exist. For example, A and/or B may indicate the following three cases: Only A exists, both A and B exist, and only B exists. In addition, the character "/" usually indicates an "or" relationship between associated objects, unless otherwise specified.

The following further describes the embodiments of the present invention in detail with reference to accompanying drawings in this specification.

Referring to FIG. 2, an embodiment of the present invention provides a first link setup method. A procedure of the method is described as follows:
Step 201: A first network device obtains location information of a first terminal and first information, where the first terminal requests to set up a session with a second terminal, and the first information is location information of the second terminal and/or identifier information of the session.
Step 202: The first network device obtains first routing information according to the location information of the first terminal and the first information, where the first routing information is routing information of a direct link between the first terminal and the second terminal.

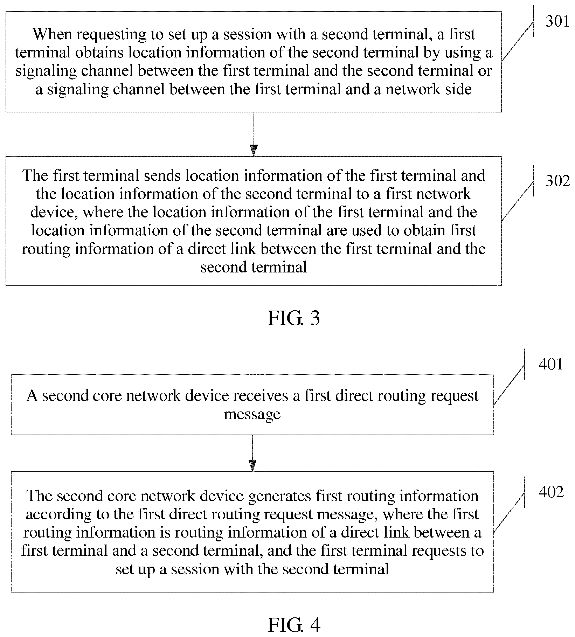

Referring to FIG. 3, an embodiment of the present invention provides a second link setup method. A procedure of the method is described as follows.

Step 301: When requesting to set up a session with a second terminal, a first terminal obtains location information of the second terminal by using a signaling channel between the first terminal and the second terminal or a signaling channel between the first terminal and a network side.

Step 302: The first terminal sends location information of the first terminal and the location information of the second terminal to a first network device, where the location information of the first terminal and the location information of the second terminal are used to obtain first routing information of a direct link between the first terminal and the second terminal.

Referring to FIG. 4, an embodiment of the present invention provides a third link setup method. A procedure of the method is described as follows.

Step 401: A second core network device receives a first direct routing request message.

Step 402: The second core network device generates first routing information according to the first direct routing request message, where the first routing information is routing information of a direct link between a first terminal and a second terminal, and the first terminal requests to set up a session with the second terminal.

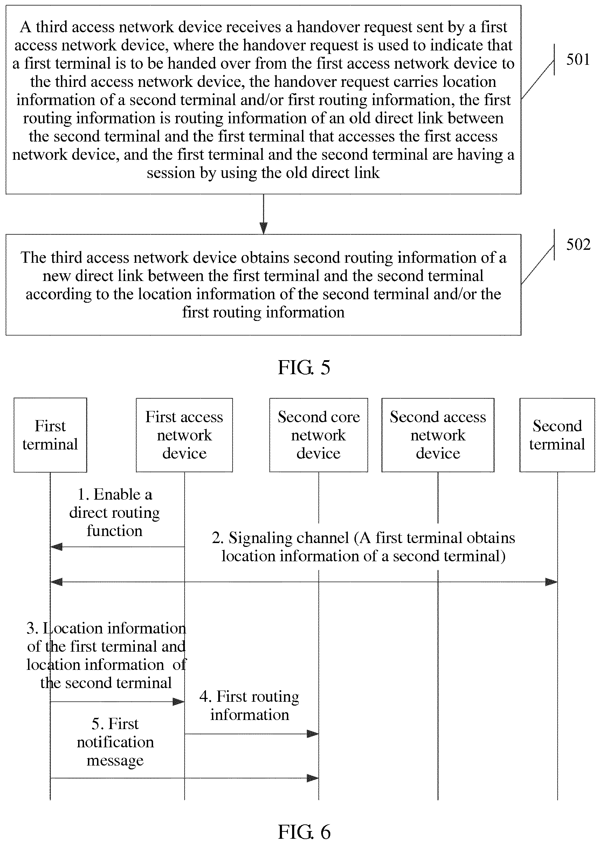

Referring to FIG. 5, an embodiment of the present invention provides a fourth link setup method. A procedure of the method is described as follows.

Step 501: A third access network device receives a handover request sent by a first access network device, where the handover request is used to indicate that a first terminal is to be handed over from the first access network device to the third access network device, the handover request carries location information of a second terminal and/or first routing information, the first routing information is routing information of an old direct link between the second terminal and the first terminal that accesses the first access network device, and the first terminal and the second terminal are having a session by using the old direct link.

Step 502: The third access network device obtains second routing information of a new direct link between the first terminal and the second terminal according to the location information of the second terminal and/or the first routing information.

FIG. 2, FIG. 3, FIG. 4, and FIG. 5 show methods in a correspondence, and therefore the methods are described together in the following.

In the following, an example in which an access network device is a base station is used for description. During actual application, the access network device may not be limited to the base station. An example in which a first core network device is an S-GW and a second core network device is an MME is used for description. Likewise, during actual application, the first core network device is not limited to the S-GW, and the second core network device is not limited to the MME. For example, any control node in a core network may act as the second core network device. An example in which a session is a P2P session is used for description. During actual application, a session type is not limited.

In the embodiments of the present invention, a first access network device and a second access network device may be a same access network device, for example, may be a same base station. That is, a first terminal and a second terminal may be served by the same base station, and then a direct link may be a link that is set up by using the same base station. Alternatively, a first access network device and a second access network device may be different base stations, and then a direct link needs to be set up across different base stations. A third access network device and the first access network device are different base stations. The third access network device and the second access network device are also different base stations.

In the embodiments of the present invention, a first network device may be a first access network device (for example, an access network device may also be referred to as a RAN device) that serves a first terminal, or may be a second core network device (for example, a core network device may also be referred to as a CN device). The following separately provides descriptions.
I. A first network device is a RAN device, that is, a first access network device, that serves a first terminal.
   Refer to FIG. 6.
   1. The first network device (referred to as, for example, a source RAN device) instructs the first terminal to enable a direct routing (Direct Routing, DR) function.
      That is, this embodiment of the present invention provides a direct routing function in a P2P network. A direct link can be set up between two terminals when the terminals at both communications ends, an access network device, and a core network device all support the function. The function may be disabled when the function is not in use, so that device power consumption can be reduced. The function may be enabled when the function is required. For example, the source RAN device may instruct the first terminal to enable the function.
      Certainly, if the function remains enabled or has been enabled, step 1 may not be performed.
   2. A signaling channel is first established between the first terminal and a second terminal, and then the first terminal requests location information of the second terminal by using the signaling channel. A path of the signaling channel may be the first terminal -> the source RAN device -> a core network device -> a gateway device -> a server -> the gateway device -> the core network device -> an access network device (referred to as, for example, a target RAN device) that serves the second terminal -> the second terminal. That is, the path of the signaling channel is the same as a conventional P2P service data transmission path (for example, the same as that described in the background part).
      Alternatively, the first terminal may obtain the location information of the second terminal by using a signaling channel between the first terminal and a network side.
      The location information of the second terminal may include at least one of an identity (identity, ID) of an access network device (that is, a second access network device) that serves the second terminal, and an ID of a cell that serves the second terminal.
   3. If the first terminal supports the direct routing function, the first terminal sends location information of the first terminal to the source RAN device. If the first terminal has obtained the location information of the second terminal, the first terminal may further send the location information of the second terminal to the source RAN device. In FIG. 6, for example, the first terminal sends the location information of the first terminal and the location information of the second terminal to the source RAN device.
   4. The source RAN device sends first routing information to the second access network device (referred to as, for example, the target RAN device), or the source RAN device sends first routing information to the target RAN device and a first core network device. In FIG. 6, for example, the source RAN device sends the first routing information to the target RAN device.
      The source RAN device first performs determining according to the location information of the first terminal and the location information of the second terminal, or the source RAN device performs determining according to the location information of the first terminal and a session ID (Session ID) of this P2P session, so as to determine whether a direct link can be set up between the first terminal and the second terminal.
      If the source RAN device performs determining according to the location information of the first terminal and the session ID of this P2P session, the first terminal may not obtain the location information of the second terminal, or even if the first terminal has obtained the location information of the second terminal, the first terminal may not send the location information of the second terminal to the source RAN device. The source RAN device may directly obtain the session ID of this P2P session.
      For example, the source RAN device may determine, according to the location information of the first terminal and the location information of the second terminal or according to the location information of the first terminal and the session ID of this P2P session, whether both the first terminal and the second terminal support the direct routing function. If both support the direct routing function, the direct link can be set up. The source RAN device may determine, according to the location information of the first terminal and the location information of the second terminal or according to the location information of the first terminal and the session ID of this P2P session, whether a distance between the access network device (that is, the first access network device) that serves the first terminal and the access network device (that is, the second access network device) that serves the second terminal supports direct-link setup. If the distance supports direct-link setup, the direct link can be set up. The source RAN device may determine, according to the location information of the first terminal and the location information of the second terminal or according to the location information of the first terminal and the session ID of this P2P session, whether there is a communications interface (for example, an X2 interface) between the first access network device and the second access network device. If there is the communications interface, the direct link can be set up. A determining manner is not limited in this embodiment of the present invention.
      For example, if the source RAN device determines that the direct link can be set up between the first terminal and the second terminal, the source RAN device may obtain the first routing information and may configure the first access network device according to the first routing information.
      When the source RAN device performs the determining, the source RAN device may obtain the first routing information in several manners. The following provides descriptions by using examples.
      Manner 1: The source RAN device directly generates the first routing information according to the location information of the first terminal and the location information of the second terminal or according to the location information of the first terminal and the session ID of this P2P session.
      Manner 2: The source RAN device sends a direct routing request message to a second core network device (for example, an MME). For example, the direct routing request message is referred to as a first direct routing request message, and the first direct routing request message is used to instruct the MME to allocate the first routing information. Then, after receiving the first direct routing request message, the MME may allocate the first routing information and send the first routing information to the source RAN device and the target RAN device, or send the first routing information to the source RAN device, the target RAN device, and the first core network device (for example, an S-GW). That is, in this case, the source RAN device needs only to send the first direct routing request message to the MME and then receive the first routing information sent by the MME, and the first routing information is sent to a corresponding device by the MME. In this case, subsequent steps are not required.
      After receiving the first routing information, the target RAN device may configure the target RAN device according to the first routing information. In this way, the direct link between the first terminal and the second terminal is set up. A path of the direct link is the first terminal -> the source RAN device -> the target RAN device -> the second terminal.
      In addition to the target RAN device, the S-GW may receive the first routing information. In this way, the target RAN device may configure the target RAN device according to the first routing information, and the S-GW may configure the S-GW according to the first routing information, so as to set up the direct link between the first terminal and the second terminal. A path of the direct link is the first terminal -> the source RAN device -> the S-GW -> the target RAN device -> the second terminal.
      Apparently, either of the paths is shorter than a prior-art transmission path (or referred to as a conventional path).
      Optionally, if the source RAN device generates and sends the first routing information, the source RAN device may send the first routing information to the target RAN device in two different manners.
      Manner 1: The source RAN device directly sends the first routing information to the target RAN device.
      Manner 2: The source RAN device sends the first routing information to the second core network device, for example, the MME, and then the MME sends the first routing information to the target RAN device.
   5. The source RAN device sends a first notification message to the MME. The first notification message is used to indicate the direct link that is set up between the first terminal and the second terminal.
      After determining that the direct link can be set up between the first terminal and the second terminal or after the first routing information is separately sent to the first access network device and the second access network device, the source RAN may notify the MME of information about the direct link that is set up between the first terminal and the second terminal.
II. A first network device is a second core network device.

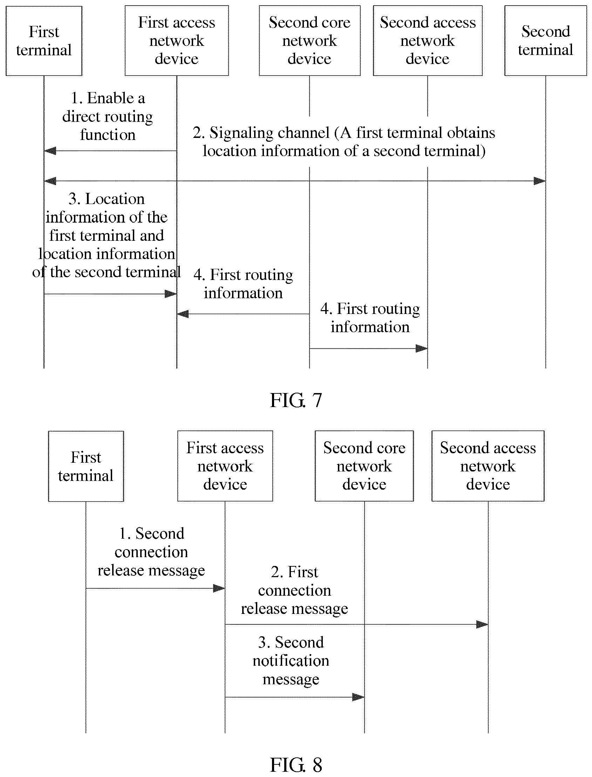

Refer to FIG. 7.

Step 1 to step 3 in FIG. 7 are similar to those in FIG. 6. Details are not described again. The following mainly describes steps different from those in FIG. 6.
4. The source RAN device sends, to the second core network device, for example, an MME, information (for example, including the location information of the first terminal and/or the location information of the second terminal) sent by the first terminal.
   The source RAN device first receives the location information of the first terminal and/or the location information of the second terminal that are/is sent by the first terminal, and then the source RAN device may directly send the information to the MME. The MME determines whether the direct link can be set up between the first terminal and the second terminal, and obtains the first routing information when the direct link can be set up. In this implementation, a determining process is performed by the MME. That is, the MME needs to first perform determining after receiving the location information of the first terminal and/or the location information of the second terminal. If determining that the direct link can be set up between the first terminal and the second terminal, the MME obtains the first routing information. If determining that the direct link cannot be set up between the first terminal and the second terminal, the MME does not obtain the first routing information, for example, may set up a conventional link for the first terminal and the second terminal. For a conventional-link setup manner, refer to the prior art. Details are not described in this embodiment of the present invention.
5. The MME separately sends the first routing information to the source RAN device and the target RAN device (this is used as an example in FIG. 7) or may separately send the first routing information to the source RAN device, the target RAN device, and an S-GW.

The MME first performs determining according to the information sent by the first terminal, so as to determine whether the direct link can be set up between the first terminal and the second terminal.

For a determining manner of the MME, refer to the determining manner of the source RAN in FIG. 6. Details are not described again.

For example, if the MME determines that the direct link can be set up between the first terminal and the second terminal, the MME may obtain the first routing information, and may separately send the first routing information to the source RAN device and the target RAN device, or may separately send the first routing information to the source RAN device, the target RAN device, and the S-GW. In this way, the source RAN device and the target RAN device may separately perform self-configuration according to the first routing information, or the source RAN device, the target RAN device, and the S-GW may separately perform self-configuration according to the first routing information.

The foregoing describes the two possible direct-link setup processes. After using of the direct link is completed or when a network problem occurs, the direct link that has been set up may need to be deleted. The following describes a direct-link deletion method.

If the direct-link setup is determined by an access network device (refer to FIG. 6), that is, the first network device is the first access network device, direct-link deletion may be determined by the first access network device. Alternatively, if the direct-link setup is determined by a core network device (refer to FIG. 7), that is, the first network device is the second core network device, direct-link deletion may be determined by the second core network device. The following separately provides descriptions.
I. A first network device is a source RAN device, that is, a first access network device.
   Refer to FIG. 8.
   1. A first terminal gives a notification to the source RAN device (for example, the first terminal sends a second connection release message to the source RAN device). The second connection release message is used to indicate that this P2P session process ends. Then, the source RAN device may determine that this P2P session ends.
      In FIG. 8, for example, the first terminal may send the second connection release message to the source RAN device after this P2P session ends. Alternatively, the first terminal or another device may send the second connection release message to the source RAN device when a network status changes (for example, no direct link is applicable to a network anymore).
   2. If a path of a direct link is the first terminal -> the source RAN device -> a target RAN device -> a second terminal, the source RAN device sends a first connection release message to a second access network device (for example, the target RAN device) (this is used as an example in FIG. 8). The first connection release message is used to instruct the target RAN device to release a resource of this P2P session and a resource of the direct link. Alternatively, if a path of a direct link is the first terminal -> the source RAN device -> a first core network device (for example, an S-GW) -> a target RAN device -> a second terminal, the source RAN device separately sends a first connection release message to the target RAN device and the S-GW. The first connection release message is used to instruct the target RAN device and the S-GW to release a resource of this P2P session and a resource of the direct link.
      The source RAN device may send the first connection release message to the target RAN device in two manners:
      Manner 1: The source RAN device directly sends the first connection release message to the target RAN device.
      Manner 2: The source RAN device sends the first connection release message to an MME, and the MME sends the second connection release message to the target RAN device.
   3. The source RAN device sends a second notification message to the MME. The second notification message is used to indicate that the direct link between the first terminal and the second terminal has been deleted.
II. A first network device is a second core network device, for example, an MME.

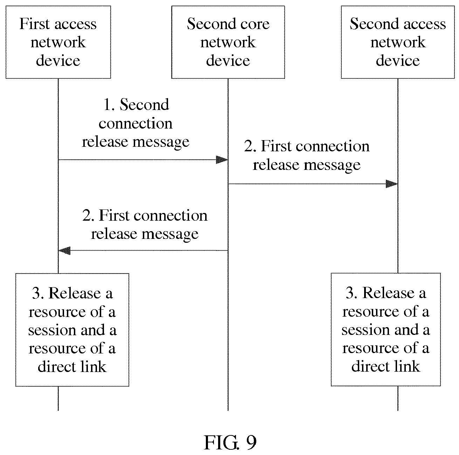

Refer to FIG. 9.
1. A first terminal or a source RAN device determines that a service ends, and the source RAN device sends a second connection release message to the MME. If the first terminal needs to send the second connection release message to the MME, the first terminal may send the second connection release message to the source RAN.
2. The MME determines a direct link corresponding to the first connection release message, so as to determine devices corresponding to the direct link. For example, the devices corresponding to the direct link may include the source RAN device and a target RAN device (this is used as an example in FIG. 9), or may include the source RAN device, a target RAN device, and an S-GW. Then, the core network device separately sends a first connection release message to the source RAN device and the target RAN device (this is used as an example in FIG. 9), and the first connection release message is used to instruct the source RAN device and the target RAN device to release this P2P session and the direct link. Alternatively, the core network device separately sends a first connection release message to the source RAN device, the target RAN device, and the S-GW, and the first connection release message is used to instruct the source RAN device, the target RAN device, and the S-GW to release this P2P session and the direct link.
3. After receiving the first connection release message, the corresponding devices (for example, the corresponding devices include the source RAN device and the target RAN device, or may include the source RAN device, the target RAN device, and the S-GW) may release a resource of this session and a resource of the direct link.

Optionally, after the direct link is set up, in addition to direct-link deletion, direct-link handover may need to be performed. For example, if a location of at least one of terminals at both communications ends changes, direct-link handover may be performed. The following describes a link handover process.

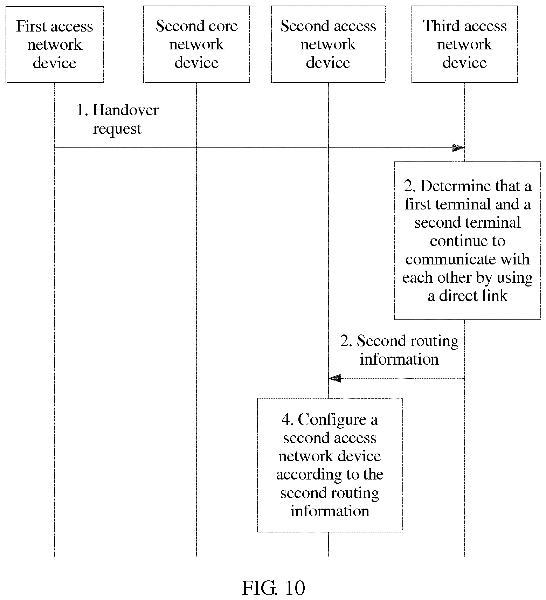

If the direct-link setup is determined by an access network device (refer to FIG. 6), that is, the first network device is the first access network device, direct-link handover may be determined by the first access network device. Alternatively, if the direct-link setup is determined by a core network device (refer to FIG. 7), that is, the first network device is the second core network device, direct-link handover may be determined by the second core network device. The following separately provides descriptions.
I. A first network device is a source RAN device, that is, a first access network device.
   Refer to FIG. 10. In FIG. 10, for example, a first terminal is to be handed over to an access network. During actual application, a second terminal may be handed over. For a processing manner of handing over the second terminal, refer to the following manner of handing over the first terminal.
   1. If the source RAN device determines that the first terminal that is communicating with the second terminal by using a direct link needs to be handed over across access network devices, the source RAN device sends a handover request to a third access network device. The handover request carries location information of the second terminal and/or first routing information. The third access network device is an access network device to which the first terminal requests to be handed over.
      When a terminal needs to be handed over to an access network device, the terminal may send a measurement report to an access network device that is currently accessed by the terminal. The measurement report may carry a request for a handover to an access network device and information of a cell to which the terminal is to be handed over, for example, an ID of the cell. In this case, after receiving a measurement report sent by the first terminal, the source RAN device learns that the first terminal is to be handed over to an access network device.
   2. The third access network device determines that after being handed over to the third access network device, the first terminal continues to communicate with the second terminal by using a direct link.
      The third access network device determines, according to location information of the first terminal that is handed over to the third access network device, the location information of the second terminal, and/or the first routing information, whether after being handed over to the third access network device, the first terminal continues to communicate with the second terminal by using a direct link, or the first terminal communicates with the second terminal by recovering a conventional link.
      For example, the first terminal needs to be handed over from the source RAN device to the third access network device. If the source RAN device is far away from the third access network device, or if there is no interface for a mutual connection between the source RAN device and the third access network device, the first terminal and the second terminal cannot communicate with each other by using a direct link anymore, and a conventional link needs to be recovered.
      If the conventional link needs to be recovered for the first terminal and the second terminal, for a conventional-link re-setup manner, refer to the prior art. Details are not described in this embodiment of the present invention.
      In FIG. 10, for example, it is determined that after being handed over to the third access network device, the first terminal can continue to communicate with the second terminal by using a direct link.
   3. The third access network device sends second routing information to a target RAN device (that is, a second access network device), so as to set up a new direct link between the first terminal and the second terminal (this is used as an example in FIG. 10). Alternatively, the third access network device separately sends second routing information to a target RAN device and an S-GW, so as to set up a new direct link between the first terminal and the second terminal.
      A device to which the second routing information is sent depends on a path of the direct link.
      In FIG. 10, for example, the third access network device determines that the first terminal and the second terminal may continue to communicate with each other by using a direct link. Then, the third access network device may obtain the second routing information according to the location information of the first terminal that is handed over, the location information of the second terminal, and/or the first routing information. The second routing information is routing information of the direct link between the second terminal and the first terminal that is handed over to the third access network device.
      Optionally, after determining that the first terminal and the second terminal may continue to communicate with each other by using a direct link, the third access network device may obtain the second routing information in different manners. The following provides descriptions by using examples.
      Manner 1: The third access network device directly generates the second routing information according to the location information of the first terminal that is handed over, the location information of the second terminal, and/or the first routing information.
      Manner 2: The third access network device sends a direct routing request message to a second core network device (for example, an MME). For example, the direct routing request message is referred to as a second direct routing request message, and the second direct routing request message is used to instruct the MME to allocate the second routing information. Then, after receiving the second direct routing request message, the MME may allocate the second routing information and send the second routing information to the third access network device and the target RAN device, or send the second routing information to the third access network device, the target RAN device, and a first core network device (for example, an S-GW). That is, in this case, the third access network device needs only to send the second direct routing request message to the MME and then receive the second routing information sent by the MME, and the second routing information is sent to a corresponding device by the MME. In this case, subsequent steps are not required.
      Optionally, if the third access network device generates and sends the second routing information, the third access network device may send the second routing information to the target RAN device in two manners.
      Manner 1: The third access network device directly sends the second routing information to the target RAN device.
      Manner 2: The third access network device sends the second routing information to the MME, and the MME sends the second routing information to the target RAN device.
      In addition, if the third access network device generates and sends the second routing information, the third access network device may further notify the MME that the new direct link is set up between the first terminal and the second terminal, and the new direct link that is set up uses the second routing information (this step is not drawn in FIG. 10).
   4. After the target RAN device receives the second routing information, which is equivalent to obtaining new DR configuration information, the target RAN device may configure the target RAN device according to the second routing information.
      Optionally, if the S-GW also receives the second routing information, after the S-GW receives the second routing information, which is equivalent to obtaining the new DR configuration information, the S-GW may configure the S-GW according to the second routing information. This step and step 4 may be performed in a random sequence. This step is not drawn in FIG. 10.
      In this way, after being handed over to the third access network device, the first terminal may continue to communicate with the second terminal by using the new direct link corresponding to the second routing information.
II. A first network device is a second core network device, for example, an MME.

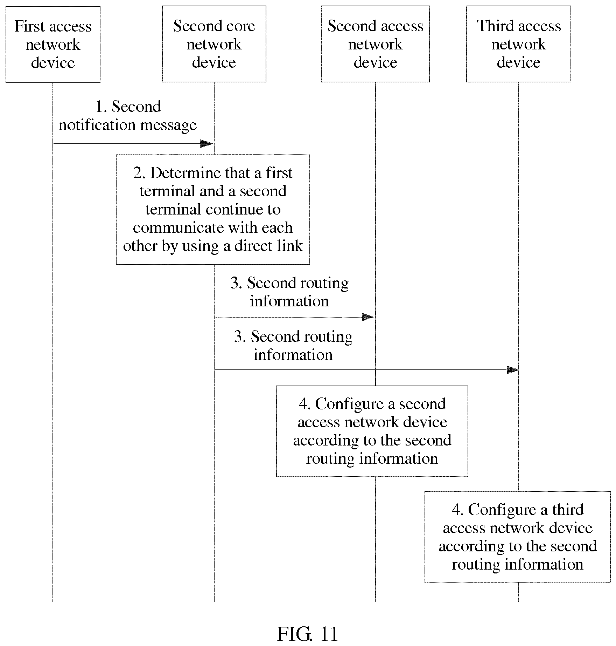

Refer to FIG. 11. In FIG. 11, still, for example, a first terminal is to be handed over. During actual application, a second terminal may be handed over. For a processing manner of handing over the second terminal, refer to the following manner of handing over the first terminal.
1. If a source RAN device determines that the first terminal that is communicating with the second terminal by using a direct link needs to be handed over across access network devices, the source RAN device sends a second notification message to the MME. The second notification message is used to indicate that the first terminal is to be handed over to a third access network device, and the second notification message may carry location information of the second terminal and/or first routing information. The first terminal requests to be handed over to the third access network device.
2. The MME determines that the first terminal and the second terminal may continue to communicate with each other by using a direct link.
   The MME determines, according to location information of the first terminal that is handed over to the third access network device, the location information of the second terminal, and/or the first routing information, whether the first terminal and the second terminal continue to communicate with each other by using a direct link or communicate with each other by recovering a conventional link. For a determining manner, refer to the descriptions of FIG. 10.
   If the conventional link needs to be recovered for the first terminal and the second terminal, for a conventional-link re-setup manner, refer to the prior art. Details are not described in this embodiment of the present invention.
   In FIG. 11, for example, it is determined that the first terminal and the second terminal may continue to communicate with each other by using a direct link.
3. The MME separately sends second routing information to the third access network device and a target RAN device (that is, a second access network device), so as to set up a new direct link between the first terminal and the second terminal (this is used as an example in FIG. 11). Alternatively, the MME separately sends second routing information to the third access network device, a target RAN device, and an S-GW, so as to set up a new direct link between the first terminal and the second terminal.
   In FIG. 11, for example, the first network device determines that the first terminal and the second terminal may continue to communicate with each other by using a direct link. Then, the MME may obtain the second routing information according to the location information of the first terminal that is handed over, the location information of the second terminal, and/or the first routing information. The second routing information is routing information of the direct link between the second terminal and the first terminal that is handed over to the third access network device.
4. After the target RAN device receives the second routing information, which is equivalent to obtaining new DR configuration information, the target RAN device may configure the target RAN device according to the second routing information.
5. After the third access network device receives the second routing information, which is equivalent to obtaining the new DR configuration information, the third access network device may configure the third access network device according to the second routing information. Step 4 and step 5 may be performed in a random sequence.

If the MME further sends the second routing information to the S-GW, after the S-GW receives the second routing information, which is equivalent to obtaining the new DR configuration information, the S-GW may configure the S-GW according to the second routing information. Likewise, this step, step 4, and step 5 may be performed in a random sequence. This step is not drawn in FIG. 11.

In this way, after being handed over to the third access network device, the first terminal may continue to communicate with the second terminal by using the new direct link corresponding to the second routing information.

In this embodiment of the present invention, a network device may determine a relatively optimal routing path between two terminals at both communications ends according to auxiliary information (for example, including location information of a terminal) reported by the terminal, so as to set up a direct link between the two terminals. Therefore, a service transmission delay can be shortened and a transmission resource can be saved.

The following describes devices in the embodiments of the present invention with reference to accompanying drawings.

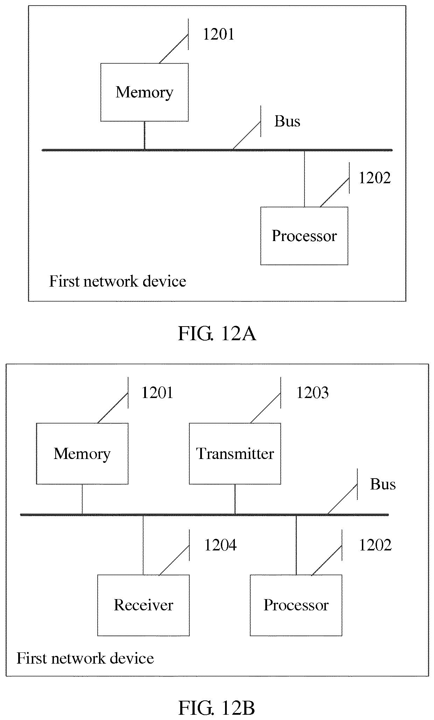

Referring to FIG. 12A, based on a same invention concept, an embodiment of the present invention provides a network device. The network device may be the first network device described in the foregoing method embodiments, and the network device may include a memory 1201 and a processor 1202.

The processor 1202 may be a central processing unit (CPU) or an application-specific integrated circuit (Application Specific Integrated Circuit, ASIC), may be one or more integrated circuits configured to control program execution, may be a hardware circuit developed by using a field programmable gate array (Field Programmable Gate Array, FPGA), or may be a baseband chip.

There may be one or more memories 1201. The memory 1201 may be a read-only memory (Read Only Memory, ROM), a random access memory (Random Access Memory, RAM), or a magnetic disk storage.

Optionally, regardless of whether the network device is the foregoing first access network device or the foregoing second core network device, referring to FIG. 12B, the network device may further include a transmitter 1203 and a receiver 1204.

The transmitter 1203 and the receiver 1204 may belong to a radio frequency system, and be configured to perform network communication with an external device, and specifically, may communicate with the external device by using a network such as Ethernet, a radio access network, or a wireless local area network. The transmitter 1203 and the receiver 1204 may be a same entity module, for example, may be an entity module that can implement transmission and receiving functions. For example, the entity module may be referred to as a transceiver. Alternatively, the transmitter 1203 and the receiver 1204 may be separate entity modules.

The memory 1201, the transmitter 1203, and the receiver 1204 may be connected to the processor 1202 by using a bus (this is used as an example in FIG. 12A and FIG. 12B), or may be separately connected to the processor 1202 by using dedicated connection cables.

Code corresponding to the foregoing methods is built into a chip by designing programming for the processor 1202, so that when running, the chip can perform the methods shown in FIG. 2 and FIG. 6 to FIG. 11. How to design programming for the processor 1202 is a technology well known to a person skilled in the art, and details are not described herein.

The network device may be configured to perform the methods shown in FIG. 2 and FIG. 6 to FIG. 11, for example, may be the foregoing first network device. Therefore, for a function and the like implemented by each unit of the network device, refer to the descriptions of the foregoing methods, and details are not described herein again.

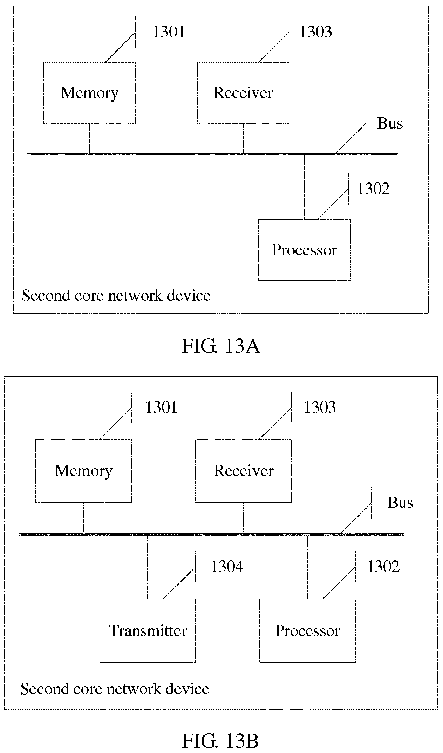

Referring to FIG. 13A, based on a same invention concept, an embodiment of the present invention provides a core network device. The core network device may include a memory 1301, a processor 1302, and a receiver 1303.

The processor 1302 may be a CPU or an ASIC, may be one or more integrated circuits configured to control program execution, may be a hardware circuit developed by using an FPGA, or may be a baseband chip.

There may be one or more memories 1301. The memory 1301 may be a ROM, a RAM, or a magnetic disk storage.

Optionally, referring to FIG. 13B, the core network device may further include a transmitter 1304.

The transmitter 1304 and the receiver 1303 may belong to a radio frequency system, and be configured to perform network communication with an external device, and specifically, may communicate with the external device by using a network such as Ethernet, a radio access network, or a wireless local area network. The transmitter 1304 and the receiver 1303 may be a same entity module, for example, may be an entity module that can implement transmission and receiving functions. For example, the entity module may be referred to as a transceiver. Alternatively, the transmitter 1304 and the receiver 1303 may be separate entity modules.

The memory 1301, the transmitter 1304, and the receiver 1303 may be connected to the processor 1302 by using a bus (this is used as an example in FIG. 13A and FIG. 13B), or may be separately connected to the processor 1302 by using dedicated connection cables.

Code corresponding to the foregoing methods is built into a chip by designing programming for the processor 1302, so that when running, the chip can perform the methods shown in FIG. 4 and FIG. 6 to FIG. 11. How to design programming for the processor 1302 is a technology well known to a person skilled in the art, and details are not described herein.

The core network device may be configured to perform the methods shown in FIG. 4 and FIG. 6 to FIG. 11, for example, may be the foregoing second core network device. Therefore, for a function and the like implemented by each unit of the core network device, refer to the descriptions of the foregoing methods, and details are not described herein again.

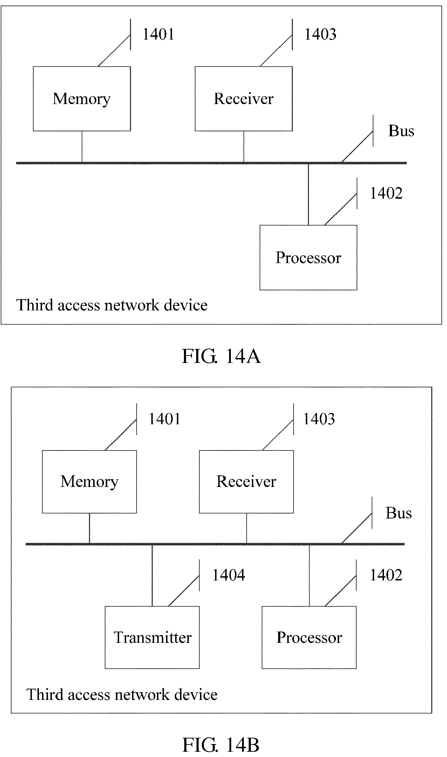

Referring to FIG. 14A, based on a same invention concept, an embodiment of the present invention provides an access network device. The access network device may include a memory 1401, a processor 1402, and a receiver 1043.

The processor 1402 may be a CPU or an ASIC, may be one or more integrated circuits configured to control program execution, may be a hardware circuit developed by using an FPGA, or may be a baseband chip.

There may be one or more memories 1401. The memory 1401 may be a ROM, a RAM, or a magnetic disk storage.

Optionally, referring to FIG. 14B, the core network device may further include a transmitter 1404.

The transmitter 1404 and the receiver 1403 may belong to a radio frequency system, and be configured to perform network communication with an external device, and specifically, may communicate with the external device by using a network such as Ethernet, a radio access network, or a wireless local area network. The transmitter 1404 and the receiver 1403 may be a same entity module, for example, may be an entity module that can implement transmission and receiving functions. For example, the entity module may be referred to as a transceiver. Alternatively, the transmitter 1404 and the receiver 1403 may be separate entity modules.

The memory 1401, the transmitter 1404, and the receiver 1403 may be connected to the processor 1402 by using a bus (this is used as an example in FIG. 14A and FIG. 14B), or may be separately connected to the processor 1402 by using dedicated connection cables.

Code corresponding to the foregoing methods is built into a chip by designing programming for the processor 1402, so that when running, the chip can perform the methods shown in FIG. 5 and FIG. 6 to FIG. 11. How to design programming for the processor 1402 is a technology well known to a person skilled in the art, and details are not described herein.

The access network device may be configured to perform the methods shown in FIG. 5 and FIG. 6 to FIG. 11, for example, may be the foregoing third core network device. Therefore, for a function and the like implemented by each unit of the access network device, refer to the descriptions of the foregoing methods, and details are not described herein again.

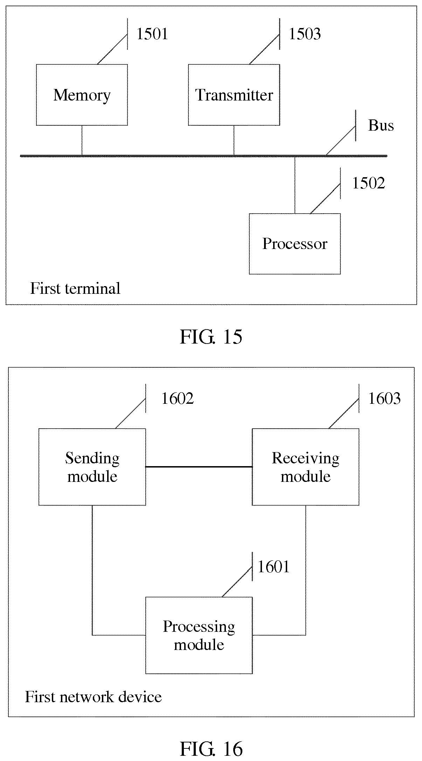

Referring to FIG. 15, based on a same invention concept, an embodiment of the present invention provides a terminal. The terminal may include a memory 1501, a processor 1502, and a transmitter 1503.

The processor 1502 may be a CPU or an ASIC, may be one or more integrated circuits configured to control program execution, may be a hardware circuit developed by using an FPGA, or may be a baseband chip.

There may be one or more memories 1501. The memory 1501 may be a ROM, a RAM, or a magnetic disk storage.

The transmitter 1503 may belong to a radio frequency system, and be configured to perform network communication with an external device, and specifically, may communicate with the external device by using a network such as Ethernet, a radio access network, or a wireless local area network.

The memory 1501 and the transmitter 1503 may be connected to the processor 1502 by using a bus (this is used as an example in FIG. 15), or may be separately connected to the processor 1502 by using dedicated connection cables.

Code corresponding to the foregoing methods is built into a chip by designing programming for the processor 1502, so that when running, the chip can perform the methods shown in FIG. 3 and FIG. 6 to FIG. 11. How to design programming for the processor 1502 is a technology well known to a person skilled in the art, and details are not described herein.

The terminal may be configured to perform the methods shown in FIG. 3 and FIG. 6 to FIG. 11, for example, may be the foregoing first terminal. Therefore, for a function and the like implemented by each unit of the terminal, refer to the descriptions of the foregoing methods, and details are not described herein again.

Referring to FIG. 16, based on a same invention concept, an embodiment of the present invention provides another network device. The network device may include a processing module 1601. Optionally, still referring to FIG. 16, the network device may further include a sending module 1602 and a receiving module 1603.

During actual application, an entity device corresponding to the processing module 1601 may be the processor 1202 in FIG. 12A and FIG. 12B, an entity device corresponding to the receiving module 1603 may be the receiver 1604 in FIG. 12B, and an entity device corresponding to the sending module 1602 may be the transmitter 1603 in FIG. 12B.

The network device may be configured to perform the methods shown in FIG. 2 and FIG. 6 to FIG. 11. For example, the network device may be the first network device. Therefore, for a function and the like implemented by each unit of the network device, refer to the descriptions of the foregoing methods, and details are not described herein again.

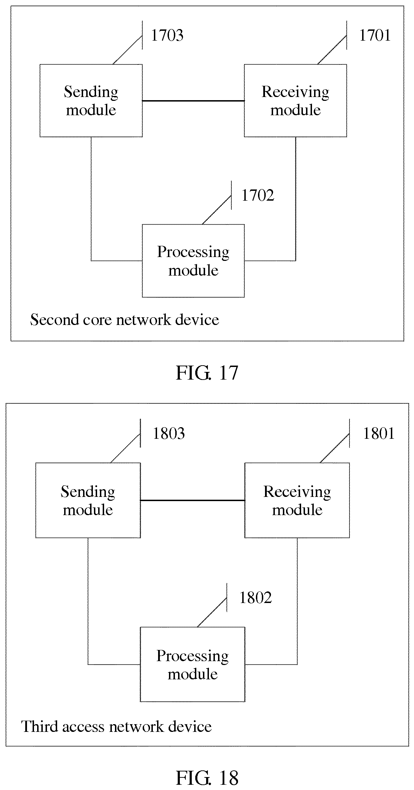

Referring to FIG. 17, based on a same invention concept, an embodiment of the present invention provides another core network device. The core network device may include a receiving module 1701 and a processing module 1702. Optionally, still referring to FIG. 17, the core network device may further include a sending module 1703.

During actual application, an entity device corresponding to the processing module 1702 may be the processor 1302 in FIG. 13A and FIG. 13B, an entity device corresponding to the receiving module 1701 may be the receiver 1303 in FIG. 13A and FIG. 13B, and an entity device corresponding to the sending module 1703 may be the transmitter 1304 in FIG. 13B.

The core network device may be configured to perform the methods shown in FIG. 4 and FIG. 6 to FIG. 11. For example, the core network device may be the second core network device. Therefore, for a function and the like implemented by each unit of the core network device, refer to the descriptions of the foregoing methods, and details are not described herein again.

Referring to FIG. 18, based on a same invention concept, an embodiment of the present invention provides another access network device. The access network device may include a receiving module 1801 and a processing module 1802. Optionally, still referring to FIG. 18, the access network device may further include a sending module 1803.

During actual application, an entity device corresponding to the processing module 1802 may be the processor 1402 in FIG. 14A and FIG. 14B, an entity device corresponding to the receiving module 1801 may be the receiver 1403 in FIG. 14B, and an entity device corresponding to the sending module 1803 may be the transmitter 1404 in FIG. 14B.

The access network device may be configured to perform the methods shown in FIG. 5 and FIG. 6 to FIG. 11. For example, the access network device may be the third access network device. Therefore, for a function and the like implemented by each unit of the access network device, refer to the descriptions of the foregoing methods, and details are not described herein again.

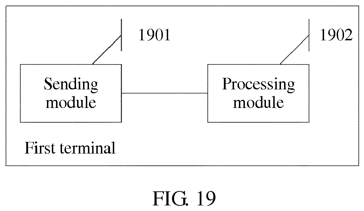

Referring to FIG. 19, based on a same invention concept, an embodiment of the present invention provides another terminal. The terminal may include a sending module 1901 and a processing module 1902.

During actual application, an entity device corresponding to the processing module 1902 may be the processor 1502 in FIG. 15, and an entity device corresponding to the sending module 1901 may be the transmitter 1503 in FIG. 15.

The terminal may be configured to perform the methods shown in FIG. 3 and FIG. 6 to FIG. 11. For example, the terminal may be the first terminal. Therefore, for a function and the like implemented by each unit of the terminal, refer to the descriptions of the foregoing methods, and details are not described herein again.

In the embodiments of the present invention, a first network device may obtain routing information (that is, the first routing information) of a direct link that is set up between a first terminal and a second terminal. In this way, when the two terminals communicate with each other, a service data transmission path may be the first terminal -> a first access network device -> a second access network device -> the second terminal, or may be the first terminal -> a first access network device -> a first core network device -> a second access network device -> the second terminal. Either of the paths is shorter than a prior-art transmission path. Therefore, a transmission delay is shortened, transmission efficiency is improved, and a transmission resource is saved.

In the present invention, it should be understood that the disclosed device and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not be performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, that is, may be located in one position, or may be distributed on a plurality of network units. Some or all of the units may be selected according to actual needs, to implement the embodiments of the present invention.

The function units in the embodiments of the present invention may be integrated into one processing unit, or each of the units may be an independent physical module.

When the integrated unit is implemented in a form of a software function unit and sold or used as an independent product, the integrated unit may be stored in a computer-readable storage medium. Based on such an understanding, all or some of the technical solutions in the present invention may be implemented in a form of a software product. The computer software product is stored in a storage medium and includes several instructions for instructing a computer device (which may be a personal computer, a server, a network device, or the like) or a processor (processor) to perform all or some of the steps of the methods described in the embodiments of the present invention. The storage medium includes: any medium that can store program code, such as a universal serial bus flash drive (Universal Serial Bus flash drive), a removable hard disk, a ROM, a RAM, a magnetic disk, or an optical disc.

The foregoing embodiments are merely used to describe the technical solutions in the present invention in detail. The foregoing embodiments are merely intended to help understand the methods in the embodiments of the present invention, and shall not be construed as a limitation on the embodiments of the present invention. Any variation or replacement readily figured out by a person skilled in the art shall fall within the protection scope of the embodiments of the present invention.

## Claims

1. A link setup method, comprising:
obtaining, by a first network device, location information of a first terminal and first information, wherein the first terminal requests to set up a session with a second terminal, and the first information is location information of the second terminal and/or identifier information of the session; and
obtaining, by the first network device, first routing information according to the location information of the first terminal and the first information, wherein the first routing information is routing information of a direct link between the first terminal and the second terminal.

2. The method according to claim 1, wherein if the first network device is a first access network device that serves the first terminal, the obtaining, by the first network device, the first routing information according to the location information of the first terminal and the first information comprises:
determining, by the first network device according to the location information of the first terminal and the first information, whether the direct link can be set up between the first terminal and the second terminal; and
if the first network device determines that the direct link can be set up between the first terminal and the second terminal, generating, by the first network device, the first routing information according to the location information of the first terminal and the first information; or
determining, by the first network device according to the location information of the first terminal and the first information, whether the direct link can be set up between the first terminal and the second terminal;
if the first network device determines that the direct link can be set up between the first terminal and the second terminal, sending, by the first network device, a first direct routing request message to a second core network device, wherein the first direct routing request message is used to instruct the second core network device to allocate the first routing information; and
receiving, by the first network device, the first routing information sent by the second core network device.

3. The method according to claim 2, wherein after the generating, by the first network device, the first routing information according to the location information of the first terminal and the first information, the method further comprises:
sending, by the first network device, the first routing information to a second access network device that serves the second terminal, so as to set up the direct link; or separately sending, by the first network device, the first routing information to a first core network device and a second access network device that serves the second terminal, so as to set up the direct link.

4. The method according to claim 3, wherein the sending, by the first network device, the first routing information to the second access network device that serves the second terminal comprises:
directly sending, by the first network device, the first routing information to the second access network device; or
sending, by the first network device, the first routing information to the second access network device by using the second core network device.

5. The method according to claim 3 or 4, wherein after the separately sending, by the first network device, the first routing information to the first access network device and the second access network device that serves the second terminal, or the separately sending, by the first network device, the first routing information to the first access network device, the first core network device, and the second access network device that serves the second terminal, the method further comprises:
sending, by the first network device, a first notification message to the second core network device, wherein the first notification message is used to indicate the direct link that is set up between the first terminal and the second terminal.

6. The method according to any one of claims 3 to 5, wherein after the direct link is set up, the method further comprises:
directly sending, by the first network device, a first connection release message to the second access network device, or sending, by the first network device, the first connection release message to the second access network device and/or the first core network device by using the second core network device, wherein the first connection release message is used to instruct to release a resource of the session and a resource of the direct link.

7. The method according to any one of claims 3 to 6, wherein after the direct link is set up, the method further comprises:
determining, by the first network device, that the first terminal is to be handed over to a third access network device; and
sending, by the first network device, a handover request to the third access network device, or sending, by the first network device, a handover request to the third access network device by using the second core network device, wherein the handover request carries the location information of the second terminal and/or the first routing information, and the location information of the second terminal and/or the first routing information are/is used to obtain second routing information of a new direct link between the first terminal and the second terminal.

8. The method according to claim 1, wherein if the first network device is a second core network device,
the obtaining, by the first network device, the location information of the first terminal and the first information comprises:
receiving, by the first network device, the location information of the first terminal and the first information that are sent by a first access network device that serves the first terminal; and
the obtaining, by the first network device, the first routing information according to the location information of the first terminal and the first information comprises:
determining, by the first network device according to the location information of the first terminal and the first information, whether the direct link can be set up between the first terminal and the second terminal; and
if the first network device determines that the direct link can be set up between the first terminal and the second terminal, generating, by the first network device, the first routing information according to the location information of the first terminal and the first information.

9. The method according to claim 8, wherein after the generating, by the first network device, the first routing information, the method further comprises:
separately sending, by the first network device, the first routing information to the first access network device and a second access network device that serves the second terminal, so as to set up the direct link; or separately sending, by the first network device, the first routing information to the first access network device, a first core network device, and a second access network device that serves the second terminal, so as to set up the direct link.

10. The method according to claim 9, wherein after the direct link is set up, the method further comprises:
separately sending, by the first network device, a first connection release message to the first access network device and the second access network device, or separately sending, by the first network device, a first connection release message to the first access network device, the second access network device, and the first core network device, wherein the first connection release message is used to instruct to release a resource of the session and a resource of the direct link.

11. The method according to claim 9 or 10, wherein after the direct link is set up, the method further comprises:
receiving, by the first network device, a second notification message, wherein the second notification message is used to indicate that the first terminal is to be handed over to a third access network device, and the second notification message carries the location information of the second terminal and/or the first routing information;
obtaining, by the first network device, second routing information according to the location information of the second terminal and/or the first routing information, wherein the second routing information is routing information of a direct link between the second terminal and the first terminal that is handed over to the third access network device; and
separately sending, by the first network device, the second routing information to the second access network device and the third access network device, or separately sending, by the first network device, the second routing information to the second access network device, the third access network device, and the first core network device.

12. A link setup method, comprising:
receiving, by a second core network device, a first direct routing request message; and
generating, by the second core network device, first routing information according to the first direct routing request message, wherein the first routing information is routing information of a direct link between a first terminal and a second terminal, and the first terminal requests to set up a session with the second terminal.

13. The method according to claim 12, wherein after the generating, by the second core network device, the first routing information, the method further comprises:
separately sending, by the second core network device, the first routing information to a first access network device that serves the first terminal and a second access network device that serves the second terminal, so as to set up the direct link; or separately sending, by the first network device, the first routing information to a first access network device that serves the first terminal, a second access network device that serves the second terminal, and a first core network device, so as to set up the direct link.

14. The method according to claim 13, wherein after the direct link is set up, the method further comprises:
separately sending, by the second core network device, a first connection release message to the first access network device and the second access network device, or separately sending, by the second core network device, a first connection release message to the first access network device, the second access network device, and the first core network device, wherein the first connection release message is used to instruct to release a resource of the session and a resource of the direct link.

15. The method according to claim 13 or 14, wherein after the direct link is set up, the method further comprises:
receiving, by the second core network device, a second direct routing request message, wherein the second direct routing request message is used to instruct the second core network device to allocate second routing information, and the second routing information is routing information of a direct link between the second terminal and the first terminal that is handed over to the third access network device;
generating, by the second core network device, the second routing information; and
separately sending, by the second core network device, the second routing information to the second access network device and the third access network device, or separately sending, by the second core network device, the second routing information to the second access network device, the third access network device, and the first core network device.

16. A link setup method, comprising:
receiving, by a third access network device, a handover request sent by a first access network device, wherein the handover request is used to indicate that a first terminal is to be handed over from the first access network device to the third access network device, the handover request carries location information of a second terminal and/or first routing information, the first routing information is routing information of an old direct link between the second terminal and the first terminal that accesses the first access network device, and the first terminal and the second terminal are having a session by using the old direct link; and
obtaining, by the third access network device, second routing information of a new direct link between the first terminal and the second terminal according to the location information of the second terminal and/or the first routing information.

17. The method according to claim 16, wherein the obtaining, by the third access network device, the second routing information of the new direct link between the first terminal and the second terminal according to the location information of the second terminal and/or the first routing information comprises:
determining, by the third access network device according to the location information of the second terminal and/or the first routing information, whether the new direct link can be set up between the first terminal and the second terminal; and
if the third access network device determines that the new direct link can be set up between the first terminal and the second terminal, generating, by the third access network device, the second routing information according to the location information of the second terminal and/or the first routing information; or
determining, by the third access network device according to the location information of the second terminal and/or the first routing information, whether the new direct link can be set up between the first terminal and the second terminal;
if the third access network device determines that the new direct link can be set up between the first terminal and the second terminal, sending, by the third access network device, a second direct routing request message to a second core network device, wherein the second direct routing request message is used to instruct the second core network device to allocate the second routing information; and
receiving, by the third access network device, the second routing information sent by the second core network device.

18. The method according to claim 17, wherein after the generating, by the third access network device, the second routing information according to the location information of the second terminal and/or the first routing information, the method further comprises:
sending, by the third access network device, the second routing information to a second access network device that serves the second terminal, so as to set up the new direct link; or sending, by the third access network device, the second routing information to a first core network device and a second access network device that serves the second terminal, so as to set up the new direct link.

19. The method according to claim 18, wherein the sending, by the third access network device, the second routing information to the second access network device that serves the second terminal comprises:
directly sending, by the third access network device, the second routing information to the second access network device; or
sending, by the third access network device, the second routing information to the second access network device by using the second core network device.

20. A link setup method, comprising:
when requesting to set up a session with a second terminal, obtaining, by a first terminal, location information of the second terminal by using a signaling channel between the first terminal and the second terminal or a signaling channel between the first terminal and a network side; and
sending, by the first terminal, location information of the first terminal and the location information of the second terminal to a first network device, wherein the location information of the first terminal and the location information of the second terminal are used to obtain first routing information of a direct link between the first terminal and the second terminal.

21. A network device, comprising:
a processing module, configured to:
obtain location information of a first terminal and first information, wherein the first terminal requests to set up a session with a second terminal, and the first information is location information of the second terminal and/or identifier information of the session; and
obtain first routing information according to the location information of the first terminal and the first information, wherein the first routing information is routing information of a direct link between the first terminal and the second terminal.

22. The network device according to claim 21, wherein if the network device is a first access network device that serves the first terminal, the network device further comprises a sending module and a receiving module, and the processing module is configured to:
determine, according to the location information of the first terminal and the first information, whether the direct link can be set up between the first terminal and the second terminal; and
if determining that the direct link can be set up between the first terminal and the second terminal, generate the first routing information according to the location information of the first terminal and the first information; or
determine, according to the location information of the first terminal and the first information, whether the direct link can be set up between the first terminal and the second terminal;
if determining that the direct link can be set up between the first terminal and the second terminal, send a first direct routing request message to a second core network device by using the sending module, wherein the first direct routing request message is used to instruct the second core network device to allocate the first routing information; and
receive, by using the receiving module, the first routing information sent by the second core network device.

23. The network device according to claim 22, wherein the sending module is further configured to:
after the processing module generates the first routing information according to the location information of the first terminal and the first information, send the first routing information to a second access network device that serves the second terminal, so as to set up the direct link; or
after the processing module generates the first routing information according to the location information of the first terminal and the first information, separately send the first routing information to a first core network device and a second access network device that serves the second terminal, so as to set up the direct link.

24. The network device according to claim 23, wherein the sending module is configured to:
directly send the first routing information to the second access network device; or
send the first routing information to the second access network device by using the second core network device.

25. The network device according to claim 23 or 24, wherein the sending module is further configured to:
send a first notification message to the second core network device after separately sending the first routing information to the first access network device and the second access network device that serves the second terminal, or separately sending the first routing information to the first access network device, the first core network device, and the second access network device that serves the second terminal, wherein the first notification message is used to indicate the direct link that is set up between the first terminal and the second terminal.

26. The network device according to any one of claims 23 to 25, wherein the sending module is further configured to:
after the direct link is set up, directly send a first connection release message to the second access network device, or send the first connection release message to the second access network device and/or the first core network device by using the second core network device, wherein the first connection release message is used to instruct to release a resource of the session and a resource of the direct link.

27. The network device according to any one of claims 23 to 26, wherein
the processing module is further configured to: after the direct link is set up, determine that the first terminal is to be handed over to a third access network device; and
the sending module is further configured to: send a handover request to the third access network device, or send a handover request to the third access network device by using the second core network device, wherein the handover request carries the location information of the second terminal and/or the first routing information, and the location information of the second terminal and/or the first routing information are/is used to obtain second routing information of a new direct link between the first terminal and the second terminal.

28. The network device according to claim 21, wherein if the network device is a second core network device, the network device further comprises a receiving module, and
the processing module is configured to:
receive, by using the receiving module, the location information of the first terminal and the first information that are sent by a first access network device that serves the first terminal;
determine, according to the location information of the first terminal and the first information that are received by the receiving module, whether the direct link can be set up between the first terminal and the second terminal; and
if determining that the direct link can be set up between the first terminal and the second terminal, generate the first routing information according to the location information of the first terminal and the first information.

29. The network device according to claim 28, wherein the network device further comprises a sending module, configured to:
after the processing module generates the first routing information, separately send the first routing information to the first access network device and a second access network device that serves the second terminal, so as to set up the direct link; or
after the processing module generates the first routing information, separately send the first routing information to the first access network device, a first core network device, and a second access network device that serves the second terminal, so as to set up the direct link.

30. The network device according to claim 29, wherein the sending module is further configured to:
after the direct link is set up, separately send a first connection release message to the first access network device and the second access network device, or separately send a first connection release message to the first access network device, the second access network device, and the first core network device, wherein the first connection release message is used to instruct to release a resource of the session and a resource of the direct link.

31. The network device according to claim 29 or 30, wherein
the processing module is further configured to:
after the direct link is set up, receive a second notification message by using the receiving module, wherein the second notification message is used to indicate that the first terminal is to be handed over to a third access network device, and the second notification message carries the location information of the second terminal and/or the first routing information; and
obtain second routing information according to the location information of the second terminal and/or the first routing information, wherein the second routing information is routing information of a direct link between the second terminal and the first terminal that is handed over to the third access network device; and
the sending module is further configured to:
separately send the second routing information to the second access network device and the third access network device, or separately send the second routing information to the second access network device, the third access network device, and the first core network device.

32. A core network device, comprising:
a receiving module, configured to receive a first direct routing request message; and
a processing module, configured to generate first routing information according to the first direct routing request message, wherein the first routing information is routing information of a direct link between a first terminal and a second terminal, and the first terminal requests to set up a session with the second terminal.

33. The core network device according to claim 32, wherein the core network device further comprises a sending module, configured to:
after the processing module generates the first routing information, separately send the first routing information to a first access network device that serves the first terminal and a second access network device that serves the second terminal, so as to set up the direct link; or
after the processing module generates the first routing information, separately send the first routing information to a first access network device that serves the first terminal, a second access network device that serves the second terminal, and a first core network device, so as to set up the direct link.

34. The core network device according to claim 33, wherein the sending module is further configured to:
after the direct link is set up, separately send a first connection release message to the first access network device and the second access network device, or separately send a first connection release message to the first access network device, the second access network device, and the first core network device, wherein the first connection release message is used to instruct to release a resource of the session and a resource of the direct link.

35. The core network device according to claim 33 or 34, wherein
the receiving module is further configured to: after the direct link is set up, receive a second direct routing request message, wherein the second direct routing request message is used to instruct the core network device to allocate second routing information, and the second routing information is routing information of a direct link between the second terminal and the first terminal that is handed over to the third access network device;
the processing module is further configured to generate the second routing information; and
the sending module is further configured to: separately send the second routing information to the second access network device and the third access network device, or separately send the second routing information to the second access network device, the third access network device, and the first core network device.

36. An access network device, comprising:
a receiving module, configured to receive a handover request sent by a first access network device, wherein the handover request is used to indicate that a first terminal is to be handed over from the first access network device to the access network device, the handover request carries location information of a second terminal and/or first routing information, the first routing information is routing information of an old direct link between the second terminal and the first terminal that accesses the first access network device, and the first terminal and the second terminal are having a session by using the old direct link; and
a processing module, configured to obtain second routing information of a new direct link between the first terminal and the second terminal according to the location information of the second terminal and/or the first routing information.

37. The access network device according to claim 36, wherein the access network device further comprises a sending module, and the processing module is configured to:
determine, according to the location information of the second terminal and/or the first routing information, whether the new direct link can be set up between the first terminal and the second terminal; and
if determining that the new direct link can be set up between the first terminal and the second terminal, generate the second routing information according to the location information of the second terminal and/or the first routing information; or
determine, according to the location information of the second terminal and/or the first routing information, whether the new direct link can be set up between the first terminal and the second terminal;
if determining that the new direct link can be set up between the first terminal and the second terminal, send a second direct routing request message to a second core network device by using the sending module, wherein the second direct routing request message is used to instruct the second core network device to allocate the second routing information; and
receive, by using the receiving module, the second routing information sent by the second core network device.

38. The access network device according to claim 37, wherein the sending module is further configured to:
after the processing module generates the second routing information according to the location information of the second terminal and/or the first routing information, send the second routing information to a second access network device that serves the second terminal, so as to set up the new direct link; or
after the processing module generates the second routing information according to the location information of the second terminal and/or the first routing information, send the second routing information to a first core network device and a second access network device that serves the second terminal, so as to set up the new direct link.

39. The access network device according to claim 38, wherein the sending module is configured to:
directly send the second routing information to the second access network device; or
send the second routing information to the second access network device by using the second core network device.

40. A terminal, comprising:
a processing module, configured to:
when the terminal requests to set up a session with a second terminal, obtain location information of the second terminal by using a signaling channel between the terminal and the second terminal or a signaling channel between the terminal and a network side; and
send location information of the terminal and the location information of the second terminal to a first network device, wherein the location information of the terminal and the location information of the second terminal are used to obtain first routing information of a direct link between the terminal and the second terminal.

41. A network device, comprising:
a memory, configured to store an instruction; and
a processor, configured to execute the instruction to: obtain location information of a first terminal and first information, wherein the first terminal requests to set up a session with a second terminal, and the first information is location information of the second terminal and/or identifier information of the session; and obtain first routing information according to the location information of the first terminal and the first information, wherein the first routing information is routing information of a direct link between the first terminal and the second terminal.

42. The network device according to claim 41, wherein if the first network device is a first access network device that serves the first terminal, the network device further comprises a transmitter and a receiver, and the processor is configured to:
determine, according to the location information of the first terminal and the first information, whether the direct link can be set up between the first terminal and the second terminal; and
if determining that the direct link can be set up between the first terminal and the second terminal, generate the first routing information according to the location information of the first terminal and the first information; or
determine, according to the location information of the first terminal and the first information, whether the direct link can be set up between the first terminal and the second terminal;
if determining that the direct link can be set up between the first terminal and the second terminal, send a first direct routing request message to a second core network device by using the transmitter, wherein the first direct routing request message is used to instruct the second core network device to allocate the first routing information; and
receive, by using the receiver, the first routing information sent by the second core network device.

43. The network device according to claim 42, wherein the processor is further configured to:
after generating the first routing information according to the location information of the first terminal and the first information, send the first routing information to a second access network device that serves the second terminal, so as to set up the direct link; or
after generating the first routing information according to the location information of the first terminal and the first information, separately send the first routing information to a first core network device and a second access network device that serves the second terminal, so as to set up the direct link.

44. The network device according to claim 43, wherein the processor is configured to:
directly send the first routing information to the second access network device by using the transmitter; or
send the first routing information to the second access network device by using the transmitter and the second core network device.

45. The network device according to claim 43 or 44, wherein the processor is further configured to:
send a first notification message to the second core network device after separately sending, by using the transmitter, the first routing information to the first access network device and the second access network device that serves the second terminal, or separately sending, by the first network device by using the transmitter, the first routing information to the first access network device, the first core network device, and the second access network device that serves the second terminal, wherein the first notification message is used to indicate the direct link that is set up between the first terminal and the second terminal.

46. The network device according to any one of claims 43 to 45, wherein the processor is further configured to:
after the direct link is set up, directly send a first connection release message to the second access network device by using the transmitter, or send the first connection release message to the second access network device and/or the first core network device by using the transmitter and the second core network device, wherein the first connection release message is used to instruct to release a resource of the session and a resource of the direct link.

47. The network device according to any one of claims 43 to 46, wherein the processor is further configured to:
after the direct link is set up, determine that the first terminal is to be handed over to a third access network device; and
send a handover request to the third access network device by using the transmitter, or send a handover request to the third access network device by using the transmitter and the second core network device, wherein the handover request carries the location information of the second terminal and/or the first routing information, and the location information of the second terminal and/or the first routing information are/is used to obtain second routing information of a new direct link between the first terminal and the second terminal.

48. The network device according to claim 41, wherein if the network device is a second core network device, the network device further comprises a receiver, and the processor is configured to:
receive, by using the receiver, the location information of the first terminal and the first information that are sent by a first access network device that serves the first terminal;
determine, according to the location information of the first terminal and the first information, whether the direct link can be set up between the first terminal and the second terminal; and
if determining that the direct link can be set up between the first terminal and the second terminal, generate the first routing information according to the location information of the first terminal and the first information.

49. The network device according to claim 48, wherein the network device further comprises a transmitter, and the processor is further configured to:
after generating the first routing information, separately send, by using the transmitter, the first routing information to the first access network device and a second access network device that serves the second terminal, so as to set up the direct link; or
after generating the first routing information, separately send, by using the transmitter, the first routing information to the first access network device, a first core network device, and a second access network device that serves the second terminal, so as to set up the direct link.

50. The network device according to claim 49, wherein the processor is further configured to:
after the direct link is set up, separately send a first connection release message to the first access network device and the second access network device by using the transmitter, or separately send a first connection release message to the first access network device, the second access network device, and the first core network device by using the transmitter, wherein the first connection release message is used to instruct to release a resource of the session and a resource of the direct link.

51. The network device according to claim 49 or 50, wherein the processor is further configured to:
after the direct link is set up, receive a second notification message by using the receiver, wherein the second notification message is used to indicate that the first terminal is to be handed over to a third access network device, and the second notification message carries the location information of the second terminal and/or the first routing information;
obtain second routing information according to the location information of the second terminal and/or the first routing information, wherein the second routing information is routing information of a direct link between the second terminal and the first terminal that is handed over to the third access network device; and
separately send the second routing information to the second access network device and the third access network device by using the transmitter, or separately send the second routing information to the second access network device, the third access network device, and the first core network device by using the transmitter.

52. A core network device, comprising:
a memory, configured to store an instruction;
a receiver, configured to receive a first direct routing request message; and
a processor, configured to execute the instruction to generate first routing information according to the first direct routing request message received by the receiver, wherein the first routing information is routing information of a direct link between a first terminal and a second terminal, and the first terminal requests to set up a session with the second terminal.

53. The core network device according to claim 52, wherein the core network device further comprises a transmitter, and the processor is configured to:
after generating the first routing information, separately send, by using the transmitter, the first routing information to a first access network device that serves the first terminal and a second access network device that serves the second terminal, so as to set up the direct link; or
after generating the first routing information, separately send, by using the transmitter, the first routing information to a first access network device that serves the first terminal, a second access network device that serves the second terminal, and a first core network device, so as to set up the direct link.

54. The core network device according to claim 53, wherein the processor is further configured to:
after the direct link is set up, separately send a first connection release message to the first access network device and the second access network device by using the transmitter, or separately send a first connection release message to the first access network device, the second access network device, and the first core network device by using the transmitter, wherein the first connection release message is used to instruct to release a resource of the session and a resource of the direct link.

55. The core network device according to claim 53 or 54, wherein
the receiver is further configured to:
after the direct link is set up, receive a second direct routing request message, wherein the second direct routing request message is used to instruct the core network device to allocate second routing information, and the second routing information is routing information of a direct link between the second terminal and the first terminal that is handed over to the third access network device; and
the processor is further configured to:
generate the second routing information; and
separately send the second routing information to the second access network device and the third access network device by using the transmitter, or separately send the second routing information to the second access network device, the third access network device, and the first core network device by using the transmitter.

56. An access network device, comprising:
a memory, configured to store an instruction;
a receiver, configured to receive a handover request sent by a first access network device, wherein the handover request is used to indicate that a first terminal is to be handed over from the first access network device to the access network device, the handover request carries location information of a second terminal and/or first routing information, the first routing information is routing information of an old direct link between the second terminal and the first terminal that accesses the first access network device, and the first terminal and the second terminal are having a session by using the old direct link; and
a processor, configured to execute the instruction to obtain second routing information of a new direct link between the first terminal and the second terminal according to the location information of the second terminal and/or the first routing information.

57. The access network device according to claim 56, wherein the access network device further comprises a transmitter, and the processor is configured to:
determine, according to the location information of the second terminal and/or the first routing information, whether the new direct link can be set up between the first terminal and the second terminal; and
if determining that the new direct link can be set up between the first terminal and the second terminal, generate the second routing information according to the location information of the second terminal and/or the first routing information; or
determine, according to the location information of the second terminal and/or the first routing information, whether the new direct link can be set up between the first terminal and the second terminal;
if determining that the new direct link can be set up between the first terminal and the second terminal, send a second direct routing request message to a second core network device by using the transmitter, wherein the second direct routing request message is used to instruct the second core network device to allocate the second routing information; and
receive, by using the receiver, the second routing information sent by the second core network device.

58. The access network device according to claim 57, wherein the processor is further configured to:
after generating the second routing information according to the location information of the second terminal and/or the first routing information, send, by using the transmitter, the second routing information to a second access network device that serves the second terminal, so as to set up the new direct link; or
after generating the second routing information according to the location information of the second terminal and/or the first routing information, send, by using the transmitter, the second routing information to a first core network device and a second access network device that serves the second terminal, so as to set up the new direct link.

59. The access network device according to claim 58, wherein the processor is configured to:
directly send the second routing information to the second access network device by using the transmitter; or
send the second routing information to the second access network device by using the transmitter and the second core network device.

60. A terminal, comprising:
a memory, configured to store an instruction; and
a processor, configured to execute the instruction to: when requesting to set up a session with a second terminal, obtain location information of the second terminal by using a signaling channel between the terminal and the second terminal or a signaling channel between the terminal and a network side; and send location information of the terminal and the location information of the second terminal to a first network device by using a transmitter, wherein the location information of the terminal and the location information of the second terminal are used to obtain first routing information of a direct link between the terminal and the second terminal.
